(19) Europäisches Patentamt
European Patent Office
Office européen des brevets

(11) EP 0 790 293 A1

(12) **EUROPEAN PATENT APPLICATION**

(43) Date of publication:
**20.08.1997 Bulletin 1997/34**

(51) Int. Cl.[6]: **C10M 105/54**
// C10N40:30

(21) Application number: **97201187.8**

(22) Date of filing: **06.02.1992**

(84) Designated Contracting States:
**DE FR GB IT SE**

(30) Priority: **06.02.1991 JP 35073/91**

(62) Document number(s) of the earlier application(s) in accordance with Art. 76 EPC:
**92904418.8 / 0 528 043**

(71) Applicant: **Asahi Kasei Kogyo Kabushiki Kaisha**
**Osaka-shi Osaka 530 (JP)**

(72) Inventors:
- **Ikeda, Masanori**
  **Fuji-shi, Shizuoka-ken (JP)**
- **Sanechika, Kenichi**
  **Fuji-shi, Shizuoka-ken (JP)**
- **Fukui, Hiroyuki**
  **Niiza-shi, Saitama-ken (JP)**

(74) Representative: **Blake, John Henry Francis**
**Brookes & Martin**
**High Holborn House**
**52/54 High Holborn**
**London WC1V 6SE (GB)**

Remarks:
This application was filed on 24 - 04 - 1997 as a divisional application to the application mentioned under INID code 62.

(54) **Lubricant**

(57) Disclosed is the use as a lubricant for refrigeration systems, in which a fluoroalkane refrigerant is employed, of a fluorine-containing aromatic compound represented by the following formula:

$$R'(OR_f)_{n'} \qquad (III)$$

wherein R' represents an n'-valent unsubstituted or substituted aromatic group having from 6 to 30 carbon atoms, n' is an integer of from 2 to 4, and $R_f$ represents an unsubstituted or partially substituted fluorocarbon residue having from 1 to 3 carbon atoms in which the ratio of fluorine atom to carbon atom is at least 0.6, and the main chain of which may have at least one ether linkage therein.

This fluorine-containing aromatic compound not only exhibits excellent miscibility with fluoroalkane refrigerants, such as HFC-134a, over a wide temperature range from low to high temperatures, but also has other excellent properties, such as excellent lubrication properties, ease in handling and excellent miscibility with various non-fluoro type oils (e.g., a hydrocarbon oil, a polyalkylene glycol and an ester oil) which are commercially, easily available at relatively low cost.

EP 0 790 293 A1

## Description

### Technical Field

The present invention relates to a lubricant comprising a fluorine-containing aromatic compound. More particularly, the present invention is concerned with a lubricant comprising a fluorine-containing aromatic compound, which has the following advantages: (1) the fluorine-containing aromatic compound is highly miscible with a fluoroalkane refrigerant suitable for use in a refrigeration system, preferably a hydrofluoroalkane, such as hydrofluoroethane, more preferably HFC-134a (1,1,1,2-tetrafluoroethane), which fluoroalkane is promising as a substitute for a chlorine containing refrigerant, such as CFC-12 (1,1-dichloro-1,1-difluoromethane) and HCFC-22 (chlorodifluoromethane), in connection with environmental protection; and (2) the fluorine-containing aromatic compound has other excellent properties, such as excellent lubrication properties, ease in handling and excellent miscibility with various non-fluoro type oils (e.g., a hydrocarbon oil, a polyalkylene glycol and an ester oil) which are easily commercially available at relatively low cost.

This application is a divisional of European Patent Application No. 92 904 418.8, the contents thereof being incorporated herein by reference.

### Background Art

CFC-12 is now widely used as a refrigerant in refrigeration equipment for car air conditioners and refrigerators, while HCFC-22 is used as a refrigerant in refrigeration equipment for room air conditioners. However, development of a refrigerant which can be used in substitution for chlorine-containing refrigerants, such as CFC-12 and HCFC-22, has been desired from the viewpoint of the protection of the ozone layer.

As a substitute refrigerant, a lower fluoroalkane (e.g., a fluoroalkane having 5 or less carbon atoms), particularly a hydrofluoroalkane, such as hydrofluoroethane, is preferred. Of such substitute refrigerants, HFC-134a is especially promising as a refrigerant because it has properties similar to those of CFC-12 and, thus, it can be used as a substitute for CFC-12 with only minor changes to the equipment. Likewise, use can be made of fluoroalkanes, such as HFC-134 (1,1,2,2-tetrafluoroethane) which is an isomer of HFC-134a, HFC-152a (1,1-difluoroethane), HFC-32 (difluoromethane) which is a candidate substitute for HCFC-22, HFC-125 (pentafluoroethane) and HFC-143a (1,1,1-trifluoroethane).

In a refrigeration system using CFC-12, a mineral oil is used as a lubricant for its compressor. CFC-12 exhibits high oleophilicity because it contains chlorine atoms, so that it is miscible with a mineral oil over a wide temperature range. Accordingly, even in a refrigeration system where evaporation and condensation of the refrigerant are repeated, phase separation of CFC-12 as the refrigerant from the lubricant does not occur.

However, various refrigerants of fluoroalkanes, including HFC-134a as a representative example thereof, are not satisfactorily miscible with a mineral oil because they contain no chlorine atom. Therefore, when a mineral oil is used as a lubricant, various serious problems occur. For example, because the lubricant is replaced by the refrigerant in a compressor, the lubrication becomes unsatisfactory. And the lubricant adheres to the inner wall of a heat exchanger, leading to a lowering of the heat exchange efficiency.

The lubricant for use in refrigeration equipment employing a fluoroalkane, such as HFC-134a, as a refrigerant should be miscible with such a fluoroalkane at least over a temperature range of from 0 °C or below to 50 °C or above, preferably from -20 °C or below to 70 °C or above, more preferably from -40 °C or below to 90 °C or above, and most preferably over a still wider temperature range.

Various polyalkylene glycol compounds and polyester compounds have been proposed as a lubricant highly miscible with HFC-134a for use in combination with HFC-134a. For example, polyalkylene glycols having at least two hydroxyl groups (especially, polyoxypropylene glycol), disclosed in the specification of U.S. Patent No. 4,755,316, are described as exhibiting a good miscibility with HFC-134a over a wide temperature range. However, the temperature range over which this lubricant is miscible with HFC-134a is still unsatisfactory, and improvement of the miscibility, especially at high temperatures, is required.

Polyoxyalkylene glycols have not only unsatisfactory lubrication properties under application conditions, but also high moisture absorption properties, and therefore, various problems are likely to arise, such as freezing of water, corrosion of metals, and lowering of a volume resistivity (such lowering of a volume resistivity causes a problem in the case of a closed type refrigeration equipment, such as a refrigerator). Accordingly, polyoxyalkylene glycols are not excellent lubricants for a refrigeration system from a practical point of view.

Polyester compounds, disclosed in Japanese Patent Application Laid-open Specification Nos. 3-128991 and 3-179091, are generally considered to be also highly miscible with HFC-134a. However, such compounds exhibit high moisture absorption properties due to ester groups contained and, in addition, are likely to undergo decompositions, such as hydrolysis, thereby causing problems in durability.

In addition to the above-mentioned polyalkylene glycol and polyester oils, fluorine-containing oils are considered to be a lubricant miscible with a fluoroalkane, such as HFC-134a.

With respect to fluorine-containing oils, the following patent application publications are noted.

In Japanese Patent Application Laid-Open Specification No. 60-96684, it is taught that when a fluoro-lubricant oil, such as a fluorinated silicone or a perfluoropolyether, is used in a fluorocarbon working medium for a heat pump or the like, the heat resistance of the fluorocarbon working medium is improved. However, no description is made therein with respect to the miscibility of the lubricant oil with a fluoroalkane to be used as a working medium.

Japanese Patent Application Laid-open Specification No. 1-118598 describes the use of fluorocompounds, such as a perfluoropolyether and a fluorinated silicone, as a lubricant for fluorocarbon refrigerants. However, no description is made therein with respect to the miscibility of such fluorocompounds with a fluoroalkane at low temperatures below about room temperature. Further, no description is made therein with respect to the miscibility of fluorocompounds other than a perfluoropolyether and a fluorinated silicone with a flouroalkane.

The present inventors have examined the miscibilities of perfluoropolyethers having the various structures indicated below, inclusive of perfluoropolyethers (trade name: Fomblin Y-06, Y-25 and Y-45, manufactured and sold by Nippon Montedison Co., Ltd., Japan) employed in Examples of Japanese Patent Application Laid-Open Specification Nos. 60-96684 and 1-118598, with a fluoroalkane, such as HFC-134a, HFC-134 and HFC-152a. As a result, it has been found that there are cases where miscibilities are observed at temperatures as high as about room temperature or above but in any case, miscibilities are unsatisfactory at temperatures as low as 0 °C or below. Accordingly, it has been confirmed that such perfluoropolyethers are not suitable as a lubricant for use in refrigeration equipment employing a fluoroalkane, such as HFC-134a, HFC-134 and HFC-152a, as a refrigerant.

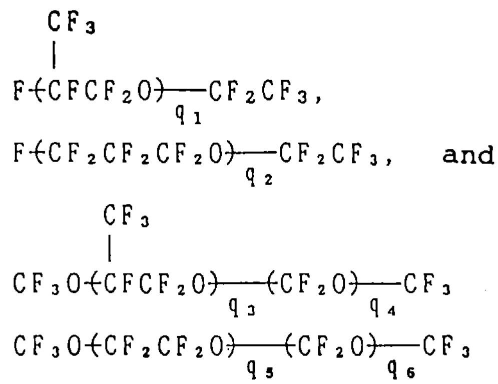

and

wherein each of $q_1$, $q_2$, $q_3$, $q_4$, $q_5$ and $q_6$ is a positive integer.

In this situation, the present inventors have made extensive and intensive researches with a view toward developing a fluorine-containing substance not only exhibiting an excellent miscibility with a fluoroalkane, such as HFC-134a, over a wide temperature range, but also having properties, such as excellent lubrication properties, ease in handling and excellent miscibility with various non-fluoro type oils (e.g., a hydrocarbon oil, a polyalkylene glycol and an ester oil).

As a result, it has been found that a fluorine-containing aromatic compound having a structure represented by formula (III) not only has an excellent miscibility with a fluoroalkane, such as HFC-134a, over a wide range of temperatures from low to high temperatures, but also other excellent properties, such as excellent lubrication properties, ease in handling and excellent miscibility with various non-fluoro type oils (e.g., a hydrocarbon oil, a polyalkylene glycol and an ester oil). The present invention has been completed, based on these findings.

It is therefore a primary object of the present invention to provide a novel lubricant of a fluorine-containing aromatic compound which has the following advantages: (1) the fluorine-containing aromatic compound exhibits not only an excellent miscibility with a fluoroalkane, such as HFC-134A, being a refrigerant promising as a substitute for a refrigerant containing chlorine atoms, such as CFC-12 and HCFC-22, over a wide temperature range of from low to high temperatures; and (2) the fluorine-containing aromatic compound has other excellent properties, such as excellent lubrication properties, ease in handling and excellent miscibility with various non-fluoro type oils (e.g., a hydrocarbon oil, a polyalkylene glycol and an ester oil).

The foregoing and other objects, features and advantages of the present invention will become apparent from the following detailed description and appended claims.

Disclosure of the Invention

In accordance with the present invention, there is provided a lubricant comprising a fluorine-containing aromatic compound represented by the formula:

$$R'(OR_{f'})_{n'} \qquad \text{(III)}$$

wherein R' represents an n'-valent unsubstituted or substituted aromatic group comprising at least one unsubstituted or substituted aromatic ring and having from 6 to 30 carbon atoms, said aromtic ring being directly bonded to the oxygen atom of the $OR_{f'}$ group, n' is an integer of from 2 to 4, $R_{f'}$ represents an unsubstituted or partially substituted fluorocarbon residue having from 1 to 25 carbon atoms in which the ratio of fluorine atom to carbon atom is at least 0.6 and the main chain of which has no ether linkage therein or has at least one ether linkage therein, wherein when the $OXR_{f'}$ groups are the same or different, said partially substituted fluorocarbon residue having a structure such that the fluorine atom or atoms or hydrogen atom or atoms of the fluorocarbon residue is further partially substituted with a halogen atom exclusive of a fluorine atom, a hydroxyl group, an alkoxy group, an amino group, a nitrile group or a carbonyl-containing group, with the proviso that the number of substituent or substituents, exclusive of substituent fluorine atom or atoms, of said substituted fluorocarbon residue is not greater than 150 %, based on the total number of fluorine and hydrogen atoms of said substituted fluorocarbon residue.

The fluorine-containing aromatic compound represented by formula (III) for use in the present invention contains fluorine atoms in a lower ratio than that of perfluoropolyether oils, so that there is an advantage that the production cost of the former is lower than that of the latter.

Further, the compound represented by formula (III) has such surprising properties that excellent miscibilities are exhibited with various fluoroalkane refrigerants, irrespective of the lower content of fluorine atoms.

Still further, the compound of formula (III) has far more excellent lubrication properties than conventional refrigeration equipment oils as a refrigerant, such as a mineral oil, and candidate refrigeration equipment oils for HFC-134a, such as polyalkylene glycols and polyester oils. That is, it has been confirmed that the compound exhibits more excellent extreme pressure resistance, abraison resistance and coefficient of abraison than turbine oil (containing additives) which is a representative high performance lubricant oil. The lubrication properties are properties which are most important for a refrigeration equipment oil, like the miscibilities with refrigerants.

Still further, the compound of formula (III) is excellent in low moisture absorption properties and stability, and therefore, solves all of the problems accompanying the use of conventional candidate refrigeration equipment oils for a fluoroalkane refrigerant, such as HFC-134a.

Still further, the compound of formula (III) has other excellent properties, such as excellent lubrication properties, ease in handling and excellent miscibility with various non-fluoro type oils (e.g., a hydrocarbon oil, a polyalkylene glycol and an ester oil) which are commercially, easily available at relatively low cost.

Still further, the compound of formula (III) can be synthesized with economic advantage in high yield from cheap raw materials.

Hereinbelow, the present invention will be described in greater detail.

In formula (III) used herein, R' represents an n'-valent unsubstituted or substituted aromatic group having from 6 to 30 carbon atoms. It is preferred that R' have from 6 to 20 carbon atoms because raw materials are easily available and synthesis therefrom is easy.

The above-mentioned aromatic group comprising at least one aromatic ring may be substituted with a substituent containing no aromatic group and having not more than 50 carbon atoms, preferably not more than 20 carbon atoms, more preferably not more than 10 carbon atoms.

Further, the aromatic group represented by R' in formula (III) may comprise at least two unsubstituted or substituted aromatic rings which are linked through a linkage group containing no aromatic ring and having not more than 50 carbon atoms, preferably not more than 20 carbon atoms, more preferably not more than 10 carbon atoms. In this connection, the ratio of carbon atoms present in at least one aromatic ring of the above-mentioned aromatic group to carbon atoms present in the entire aromatic group is generally at least 0.1, preferably at least 0.2, and more preferably at least 0.5.

The above-mentioned substituent is a monovalent group, and the above-mentioned linkage group has a valence of at least 2. Examples of these groups, given with respect to both of the substituent group and the linkage group, include saturated hydrocarbon residues, such as alkyl groups, hydrocarbon residues each having a valence of from 2 to 4 and alicyclic hydrocarbon residues each having a valence of from 2 to 4, unsaturated hydrocarbon residues, such as an allyl group, halogenated hydrocarbon residues, such as a 2-chloroethyl group, halogen atoms, such as a chlorine atom and a fluorine atom, polar groups containing an oxygen atom, a nitrogen atom, a phosphorus atom or a sulfur atom, such as a hydroxyl group, a thiol group, an alkoxy group, a nitrile group, a nitro group, an ether group, a thioether group, an ester group, a carbonyl group, a sulfonyl group, a sulfinyl group, a carboxyl group, a carboxylate group, an amino group, a thiocarbamate group, an amido group, an imido group, a pyridine group, a pyrimidine group, a piperidine group, a triazine group, a phosphine group, a benzoimidazol group, a phosphite ester group, a triazol group, a tetrazol group, a thiazol group and a thiadiazol group.

Specific examples of R' in formula (III) include the following groups:

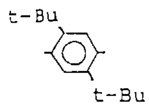 , 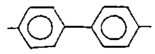 , 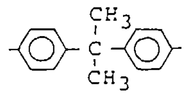 ,

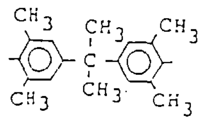 , 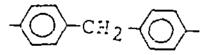 , 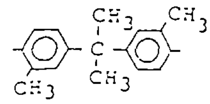 ,

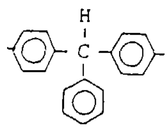 , 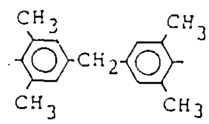 , 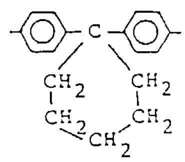 ,

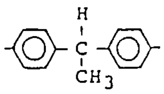 , 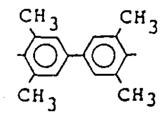 , 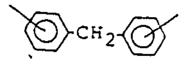 ,

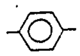 , 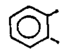

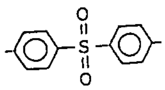 , 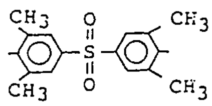 , 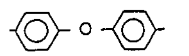 ,

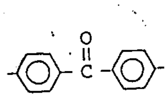 , 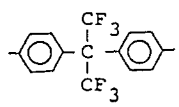 , 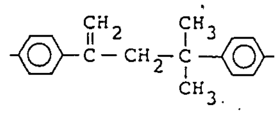 ,

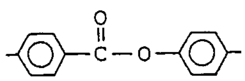 , 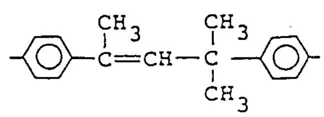 ,

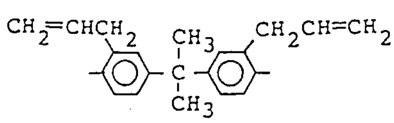 , 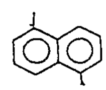 ,

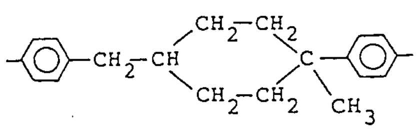 , 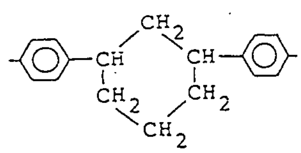 ,

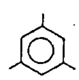 , 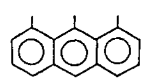 ,

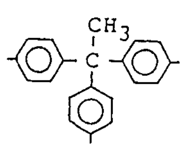 , 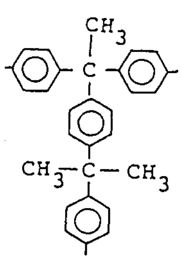 ,

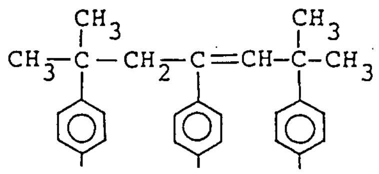 , 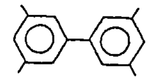 ,

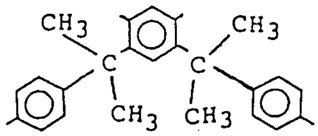 ,

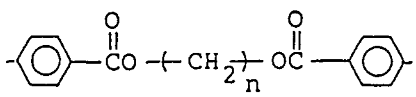 ,

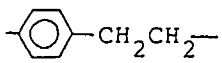 , 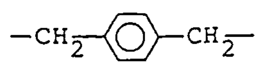 ,

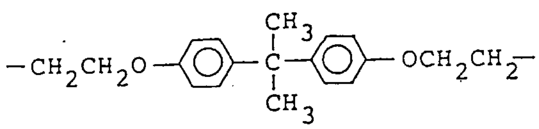 ,

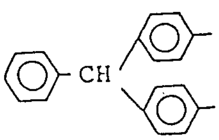 , 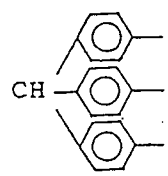 ,

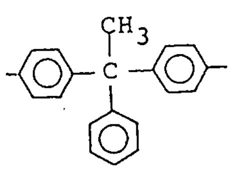 , 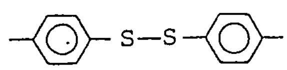 ,

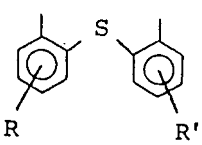 and 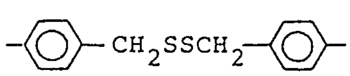

wherein R and R' each independently represent a lower alkyl group.

Shown above are various examples of aromatic groups having at least one aromatic ring, which can be used as R' in formula (III). When these groups are present as R', the aromatic ring is directly bonded to the group of formula-$OR_f$, because a highly stable compound represented by formula (III) can be easily synthesized.

The value of n' of formula (III) depends on the valence of R'. In order to facilitate the synthesis and cause the viscosity to be in an appropriate range, n' is generally an integer selected from 2, 3 and 4, and preferably 2.

In formula (III), $R_{f'}$ groups may be the same or different.

In formula (III), $R_{f'}$ represents an unsubstituted or partially substituted fluorocarbon residue having from 1 to 3 carbon atoms.

The above-mentioned unsubstituted fluorocarbon residue represents a substituent having a structure in which the hydrogen atoms of each of various types of hydrocarbon residue are partially or entirely substituted with fluorine atoms. Examples of such fluorocarbon residues include fluoroalkyl groups having a saturated structure, fluoroalkenyl groups having an unsaturated structure, and fluoroaryl and fluoroaralkyl groups having an aromatic ring, in which each of the alkyl, alkenyl, aryl and aralkyl groups is partially or entirely substituted with a fluorine atom. Of these groups, fluoroalkyl groups and fluoroalkenyl groups are preferred because their synthesis is easy.

In addition, $R_{f'}$ may be a partially substituted fluorocarbon residue. The substituted fluorocarbon residue represented by $R_{f'}$ is a substituted member selected from the group consisting of a fluoroalkyl, a fluoroalkenyl, a fluoroaryl and a fluoroaralkyl group in which each of the alkyl, alkenyl, aryl and aralkyl groups is partially or entirely substituted with a fluorine atom, the fluorine atoms or hydrogen atoms of the fluorocarbon residue being further partially substituted with various substituents which are stable under application conditions for a refrigeration equipment oil, such as halogen atoms, e.g., a chlorine atom, a bromine atom and an iodine atom, a hydroxyl group, alkoxy groups, an amino group, a nitrile group, and carbonyl-containing groups, e.g., an ester group, amide groups, acyl groups and a carboxyl group. The number of substituents, other than fluorine atoms, of the partially substituted fluorocarbon residue is not greater than 150 %, preferably not greater than 100 %, based on the total number of fluorine atoms and hydrogen atoms (if any) of the partially substituted fluorocarbon residue. Of these partially substituted fluorocarbon residues, fluorochloroalkyl groups are preferred because excellent lubrication properties are exhibited and because synthesis is easy.

Further, the main chain of the above-mentioned unsubstituted or substituted fluorocarbon residue may have a structure having at least one ether group.

In $R_{f'}$, the ratio of fluorine atom to carbon atom is generally at least 0.6, preferably at least 1, and more preferably at least 1.5. When the ratio of fluorine atom to carbon atom in $R_{f'}$ is too low, unfavorably, the compound of formula (III) is likely to exhibit poor miscibility with fluoroalkanes and poor stability.

The fluorine-containing aromatic compound to be employed in the present invention and represented by formula (III) may be synthesized according to various methods.

Hereinbelow, an illustrative mode of synthesis is described for various fluorine-containing aromatic compounds. The compounds of formula (III) may also be synthesized according to a similar procedure:

(1) Reaction of a phenol or a thiophenol with a fluorine-containing olefin:

A number of methods are known for the synthesis of fluorine-containing aromatic compounds by the reaction of phenols or thiophenols with fluorine-containing olefins.

Representative examples of methods are illustrated below, wherein a perfluoroolefin is used as a fluorine-containing olefin:

$$Ar'XH + C_{n'}F_{2n'} \longrightarrow \begin{cases} Ar'XC_{n'}F_{2n'-1} & [2] \\ Ar'XC_{n'}F_{2n'}H & [3] \end{cases}$$

Wherein Ar' represents a monovalent aromatic group, X represents an oxygen atom or a sulfur atom, and n' is an integer of from 2 to 20.

Representative examples of reactions between phenols and fluorine-containing olefins, are indicated below.

For example, Advance in Fluorine Chemistry, 4, 50 (1965) indicates examples of reactions similar to those of formulae [2] and [3] in connection with the ionic reactions of the following various types of fluorine-containing olefins with phenols, alcohols or thiophenols.

$CF_2=CF_2$, $CF_2=CFCl$, $CF_2=CFBr$, $CF_2=CFH$, $CF_2=CHCl$, $CF_2=CCl_2$, $CHF=CCl_2$, $CF_3CF=CF_2$, $CClF_2CF=CF_2$, $CF_3CCl=CF_2$, $CF_3CF=CCl_2$, $CF_3CCl=CClF$, $CF_3CH=CH_2$, $CF_3CH=CHCl$, $CF_3CCl=CHCl$, $CF_3CCl=CCl_2$, $CF_3CF_2CF=CF_2$, $CF_3CF=CFCF_3$, $(CF_3)_2C=CF_2$, $CF_2=CF-CF=CF_2$,

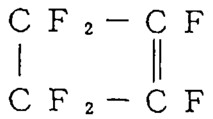,
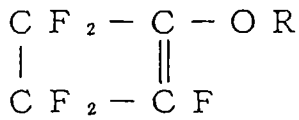

and $CF_3Cl=CClCF_3$

wherein $R_1$ represents an alkyl group.

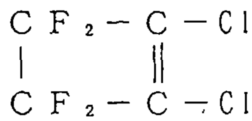,

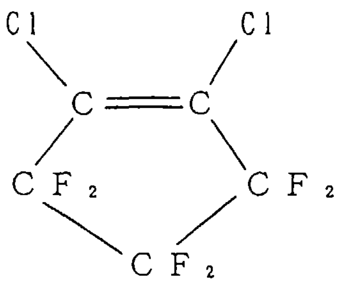.

$CF_3CCl=CClCF_3$, $CCl_2FCClFCF=CClF$ and $CF_3$-$(CF_2)_4$-$CF=CF_2$

Journal of American Chemical Society, 73, 5831 (1951) discloses the reaction:

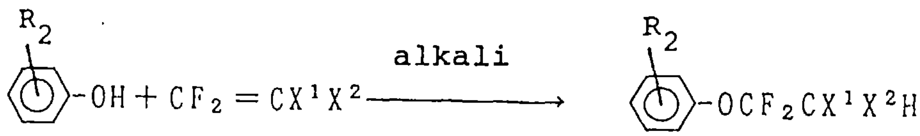

[4]

wherein $R_2$ represents a hydrogen atom or an alkyl group, and $X^1$ and $X^2$ each independently represent a fluorine atom, a chlorine atom or a hydrogen atom.

142nd Meeting American Chemical Society, Atlantic City, N.J., Sept. 1962 Abs, P19U discloses the reaction:

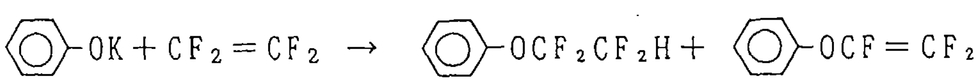
[5]

Journal of American Chemical Society, 82, 5116 (1960) discloses the reaction:

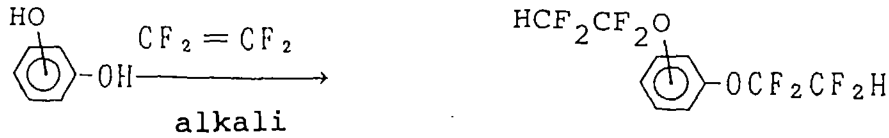


[6]

$$\text{1,6-Naphthalenediol} \xrightarrow[\text{alkali}]{CF_2=CF_2} 1,6(HCF_2CF_2O)_2C_{10}H_6 \quad [7]$$

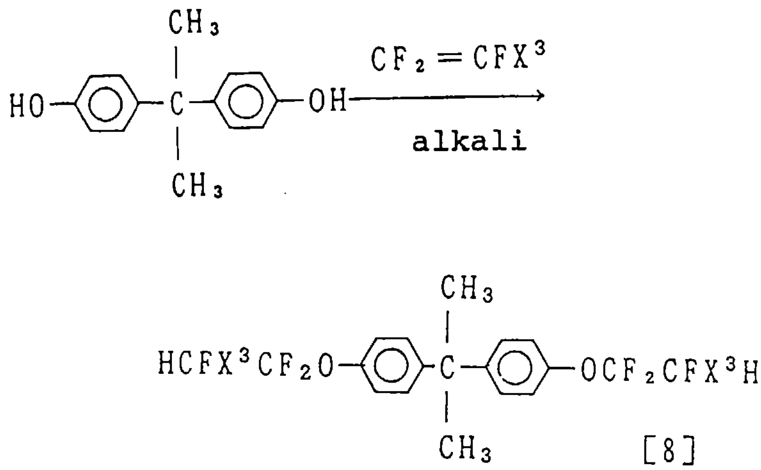


[8]

wherein $X^3$ represents a chlorine atom or a fluorine atom.

Nippon Kagakukai-shi 1975, 311 discloses the reaction:

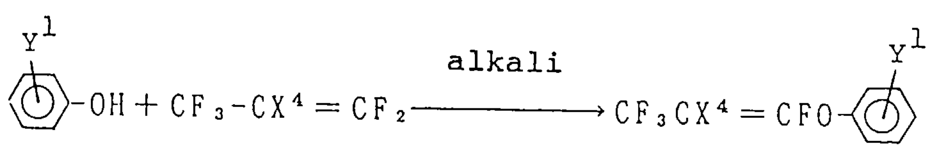


[9]

wherein $Y^1$ represents a hydrogen atom, -OMe or -NO2, and $X^4$ represents a fluorine atom or $-CF_3$.

$$PhOH + CF_3CF=CF_2 \longrightarrow CF_3CHFCF_2OPh \quad [10]$$

Unsaturated bond-containing oligomers derived from various fluorine-containing olefins, such as a hexafluoropropene (HFP) oligomer of formula [11] below, a tetrafluoroethylene (TFE) oligomer of formula [12] below and a chlorotrifluoroethylene oligomer, can also be used as a raw material in the synthetic reactions as represented by formulae [2] and [3] above.

$$C_{3m}F_{6m} \quad [11]$$

wherein m is an integer of 2 or greater, preferably from 2 to 6.

$$C_{2m'}F_{4m'} \quad [12]$$

wherein m' is an integer of 2 or greater, preferably from 2 to 10.

Examples of reactions of such oligomers include the following reactions:

Bull. Chem. Soc. Japan, 49 502 (1976) discloses the reaction:

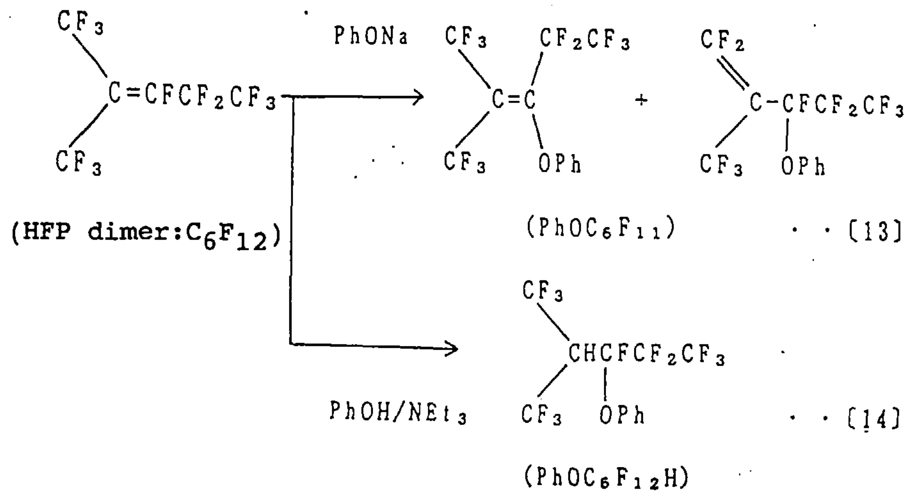


(HFP dimer: $C_6F_{12}$)

($PhOC_6F_{11}$) · · [13]

($PhOC_6F_{12}H$) · · [14]

wherein Et represents an ethyl group.

Nippon Kagakukai-shi 1978, 253 discloses the reaction:

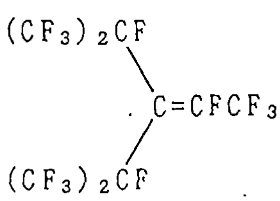

or

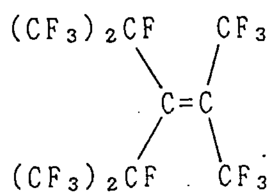

(HFP trimer: $C_9F_{18}$)

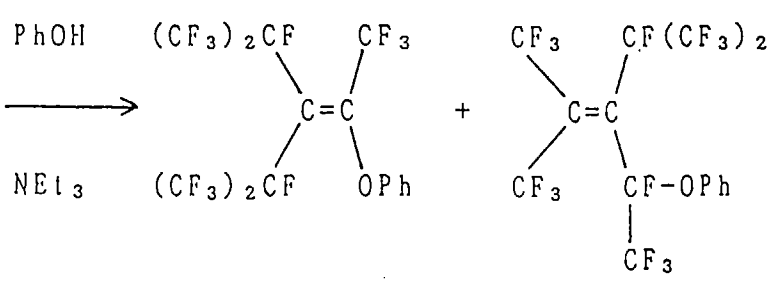


· · [15]

($PhOC_9F_{17}$)

"Oligomer" edited by Okawara, Saegusa and Higashimura and published by Kodansha Scientific Ltd. (1976) pages 288 to 291, discloses representive examples of reactions between various TFE pentamers ($C_{10}F_{20}$) or HFP trimers

($C_9F_{18}$) and phenols, as represented by the following formulae:

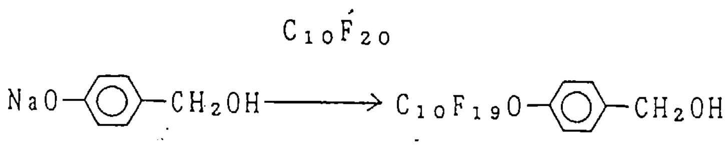


[16]

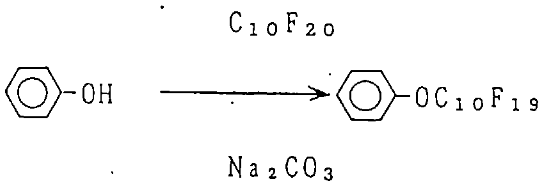


[17]

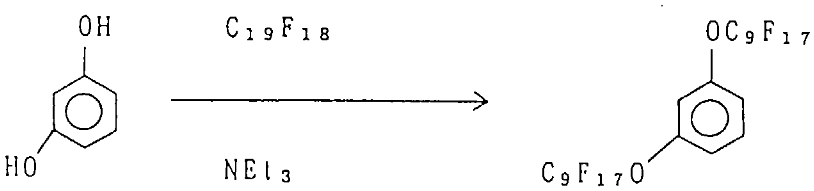


[18]

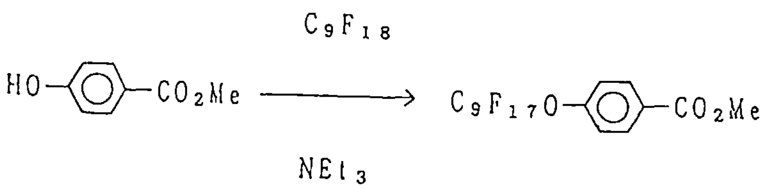


[19]

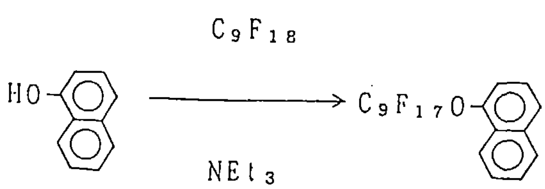


[20]

Journal of Fluorine Chemistry 54, 162 (1991) discloses addition reactions between a perfluorovinyl ether and a phenol, as represented by formulae [21'] and [21'']:

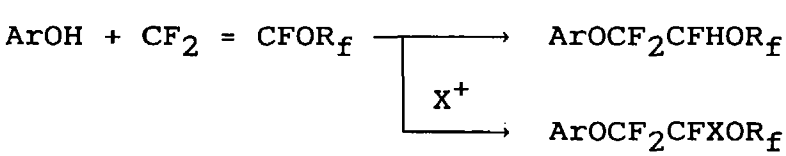


[21']

[21'']

wherein $R_f$ represents $-C_3F_7$, $-CF_2CF(CF_3)OC_3F_7$ or $-CF_2CF(CF_3)OCF_2CF_2CO_2CH_3$, and X represents a chlorine atom or a bromine atom.

Izvest. Akad. Nauk S.S.S.R., Otdel. Khim. Nauk 1952, 261-7 discloses addition reactions between a thiophenol and a chlorotrifluoroethylene or a tetrafluoroethylene, as represented by formula [21''']:

$$PhSH + CF_2 = CXF \xrightarrow{\text{NaOH or KOH}} PhSCF_2CHXF \qquad [21''']$$

wherein X represents a chlorine atom or a fluorine atom.

Bull. Soc. Chim. Fr., 1972, (8), 3202-5 discloses an addition reaction between a thiophenol and a chlorotrifluoroethylene as represented by formula [21''''].

$$PhSNa + CF_2 = CClF \rightarrow PhCF = CClF \qquad [21'''']$$

(2) Reactions between phenols or thiophenols and saturated fluorocarbons:

A number of reaction schemes are possible in the reaction of phenols or thiophenols with saturated fluorocarbons for producing fluorine-containing aromatic compounds. Representive examples of such reaction schemes include the following reactions:

$$Ar'X^- + R_fX^5 \rightarrow Ar'XR_f \qquad [21]$$

$$Ar'X^6 + R_f^1X^- \rightarrow Ar'XR_f^1 \qquad [22]$$

wherein X represents an oxygen atom or a sulfur atom, $X^5$ and $X^6$ each independently represent a halogen atom, $-OSO_2Me$, $-OCOCF_3$,

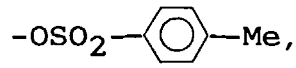

$-OSO_2CF_3$, $-OSO_2CCl_3$ or $-OSO_2Cl$, which are substituents readily liberated in the form of an anion, Ar' represents a monovalent aromatic group, and $R_f^1$ has the same meaning as defined for $R_f$' of formula (III), which represents a group capable of assuming an anion structure of the formula $R_f1X^-$.

Actual, Chem., 1987,151 discloses the reactions:

$$R^3C_6H_4X_7 + CF_3CH_2OH \xrightarrow{\text{base}} R^3C_6H_4OCH_2CF_3 \qquad [23]$$

$$R^3C_6H_4OH + CF_3CH_2OR^4 \xrightarrow{\text{base}} R^3C_6H_4OCH_2CF_3 \qquad [24]$$

wherein $R^3$ represents a hydrogen atom, 4-Cl, 4-Br, $2-MeO_2C$, $4-O_2N$, $2-O_2N$ or $4-CF_3$, $X_7$ represents a fluorine atom, a chlorine atom or a bromine atom, and $R_4$ represents $-SO_2Me$, $-COCF_3$, $-SO_2CCl_3$, $-SO_2C_6H_4Me-P$ or $-SO_2Cl$.

"Chemistry of Organic Fluorine Compounds" Halsted Press, 2nd Edition, P279 discloses a number of methods for synthesizing a fluorine-containing ether compound and a fluorine-containing thioether compound, in which an alcohol, a phenol or a thiol is alkylated at oxygen atom or sulfur atom portions thereof.

Journal of Organic Chemistry, 50, 4047 (1985) discloses the reaction:

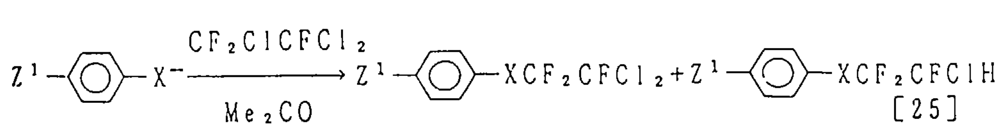


[25]

wherein $Z^1$ represents a hydrogen atom, a methyl group, a methoxy group or a chlorine atom, and X represents an oxygen atom or a sulfur atom.

Industrial and Engineering Chemistry, 39, 412 (1947) discloses the reactions:

$$PhONa + CHCl_2CF_2Cl \xrightarrow{Me_2CO} CHCl_2CF_2OPh \quad [26]$$

$$PhONa + CCl_3CF_2Cl \xrightarrow{MeCOEt} CHCl_2CF_2OPh \quad [27]$$

Tetrahedron Letters, 22, 323 (1981) discloses the reaction:

$$PhXK + CF_2Br_2 \xrightarrow{DMF} PhXCF_2H + PhXCF_2Br \quad [28]$$

wherein X represents an oxygen atom or a sulfur atom.

Pure and Applied Chemistry, 59, 1015 (1987) discloses a number of reactions of various fluorine-containing halide compounds represented by formula [29] below with phenoxides.

$$CZ^2Z^3Z^4CFZ^3Z^4 \quad [29]$$

wherein $Z^2$ represents a chlorine atom, a bromine atom or an iodine atom, and, $Z^3$ and $Z^4$ each represent a fluorine atom, a chlorine atom, a bromine atom, a $CF_3$ group or a hydrogen atom.

Examples of such reactions include the following reactions:

$$PhS^- + CF_3CCl_3 \rightarrow PhSCCl_2CF_3 \quad [30]$$

$$PhO^- + CF_2ClCFCl_2 \rightarrow PhOCF_2CFCl_2 \quad [31]$$

Journal of Organic Chemistry, 25, 2009 (1960) discloses the reaction:

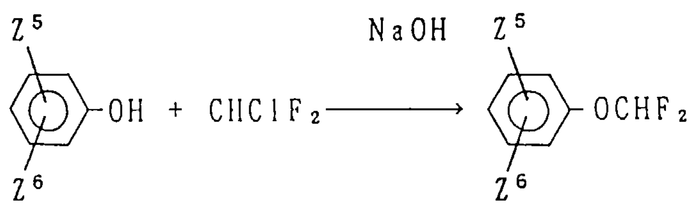


[32]

wherein $Z^5$ and $Z^6$ each represent a hydrogen atom, a methyl group, a methoxy group, a nitrile group, or a chlorine atom.

In addition, fluorine-containing aromatic compounds represented by formula (III) can be synthesized by the use of methods for forming various types of ether linkages and thioether linkages.

For example, an ether formation reaction comprising reacting a hydroxyl group with an epoxy group as indicated below, can be utilized:

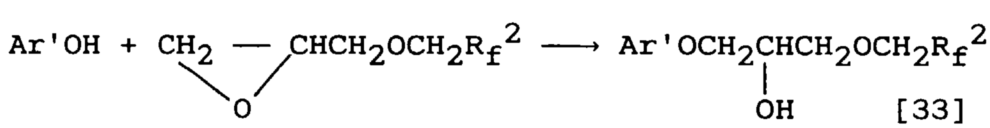

[33]

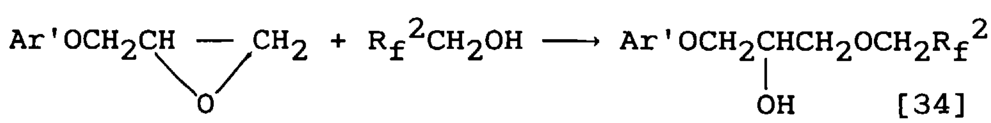

[34]

wherein Ar' represents a monovalent aromatic group, and $R_f^2$ represents a fluorocarbon residue having from 1 to 16 carbon atoms.

Further, a method in which fluorine atom or atoms are introduced into a precursor of the compound represented by formula (III) by various methods, may be available, or a method in which reaction products obtained by the various methods described above are converted into a desired compound represented by formula (III) using various reactions, may be available.

For example, the following method can be mentioned, as disclosed in Actual. Chem., 1987, 151:

$$R^3C_6H_4OCH_2CF_3 \longrightarrow R^3C_6H_4OCCl_2CF_3 \xrightarrow{HF/SbCl_5} R^3C_6H_4OCF_2CF_3 \quad [35]$$

wherein $R^3$ has the same meaning as defined for $R^3$ in formulae [23] and [24].

The fluorine-containing olefin and the fluorine-containing compound, such as a saturated fluorocarbon, each of which is to be used in the above-mentioned reactions, can be synthesized by various known methods.

For example, such methods include a synthetic method by halogen exchange disclosed in "Advances in Fluorine Chemistry" Butterworth, vol. 3, p181, a method disclosed in "Chemistry of Organic Fluorine Compounds" Halsted Press, and methods for producing fluoroolefin Laid-Open Specification No. 50-117705 and Japanese Patent Application Publication Specification Nos. 43-11885 and 47-22563. The methods set out above are not limiting, and various other methods can be employed.

The fluorine-containing aromatic compound represented by formula (III) can be synthesized by various methods, and the reactions mentioned hereinbefore are only some examples. Accordingly, the synthetic method of the compound represented by formula (III) is not restricted to those mentioned hereinbefore.

Examples of $R_f$ groups of the compound represented by formula (III) for use in the present invention are set out below, which are, however, only some examples of $R_f$ groups of compounds of formula (III) synthesized by various methods. These are not critical, and other various $R_f$ groups can be employed.

$$Z^7\text{-}(CF_2)_{L1}\text{-}(CH_2)_{L2}\text{-} \quad [36]$$

wherein $Z^7$ represents a fluorine atom, a chlorine atom, an iodine atom or a hydrogen atom, $L_1$ is an integer of from 1 to 3, and $L_2$ is 0, 1 or 2, with the proviso that $L_1 + L_2 \leqq 3$.

Specific examples of groups of formula [36] include the following groups:

$CF_3$-, $CF_3CH_2$-, $CF_3CH_2CH_2$-, F-$(CF_2)_2$-, F-$(CF_2)_3$-,F-$(CF_2)_2$-$CH_2$-, $ClCF_2$-, Cl-$(CF_2)_2$-, $BrCF_2CF_2$-, $BrCF_2$-, I-$CF_2$-, $HCF_2CH_2CH_2$-, $HCF_2CH_2$-,$CF_3CHF$-, $CH_3CF_2$-, $CH_2FCF_2$-, $CF_2HCF_2$-, $CH_2F$-, $CHF_2CH_2$-, $CF_3CCl_2$-, $CF_3CHCl$-, $CF_3CFCl$-, $CFCl_2CF_2$-, $CHFClCF_2$-, $CHCl_2CF_2$-, $CF_3CHFCF_2$-, $CH_2ClCF_2$-, $CF_3CHClCF_2$- and -$CZ^3Z^4CFZ^3Z^4$ [40]

wherein $Z^3$ and $Z^4$ are as defined for $Z^3$ and $Z^4$ of formula [29], respectively.

$$-CF_2CX^1X^2H \quad [42]$$

wherein $X^1$ and $X^2$ are as defined for $X^1$ and $X^2$ of formula [4], respectively,

$$-C_{n'}F_{2n'-1} \quad [43]$$

wherein n' is 2 or 3.

Examples of these groups include the following groups of formulae [44] and [45]:

$$-C_3F_5 \quad [44]$$

$$-C_2F_3 \quad [45]$$

$$-C_{n'}F_{2n'}H \quad [46]$$

wherein n' is 2 or 3.

Examples of these groups include the following groups of formulae [47] and [48]:

$$-C_3F_6 \quad [47]$$

$$-C_2F_4H \qquad [48]$$

Specific examples of groups represented by formulae [43] to [48] include the following groups:

$CF_2$=CF-, $CF_2$=$CFCF_2$-, $CF_3CF$=CF-, and $CF_3CHFCF_2$-. In addition, the following groups can be used. CFCl=CF-, $CF_3CCl$=CF-, $CCl_2$=CF-, CHCl=CF-, $(CF_3)_2CH$- and $CF_3CFClCFCl$-

As described above, the fluorine-containing aromatic compound of formula (III) to be employed in the present invention can be synthesized according to various methods, and can be purified by, for example, distillation, extraction or adsorption.

In each of the above-mentioned methods, the compound of formula (III) can be synthesized in high yield by reacting a polyvalent phenol with a cheap fluoroolefin, such as $CF_2$=$CF_2$, $CF_2$=CFCl and $CF_2$=$CFCF_3$, produced on a commercial scale. Alternatively, the compound of formula (III) can also be synthesized by reacting a polyvalent phenol with a cheap chlorofluorocarbon, such as HCFC-22 ($CF_2HCl$) and CFC-113 ($CF_2ClCFCl_2$). Further, it can be synthesized from a cheap fluorine-containing alcohol produced on a commercial scale, such as $CF_3CH_2OH$ and $CF_3CF_2CH_2OH$.

Specific examples of compounds represented by formula (III) include the following compounds:

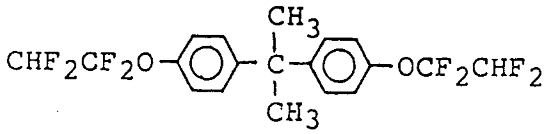

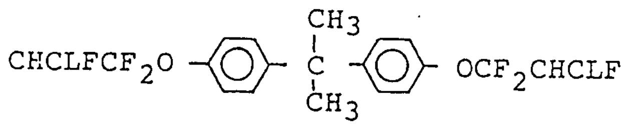

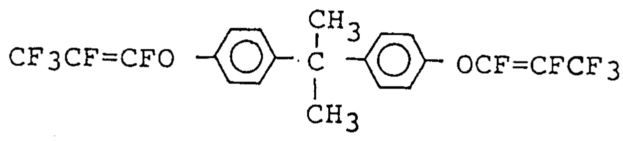

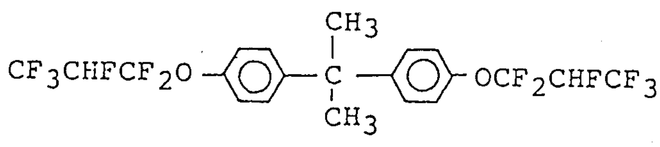

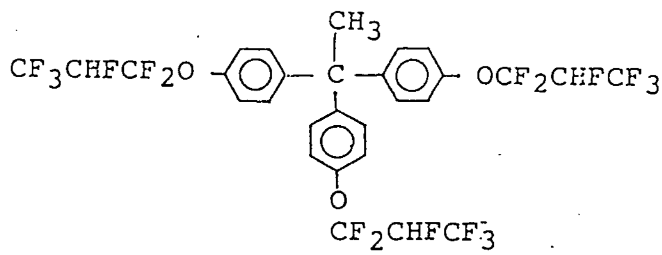

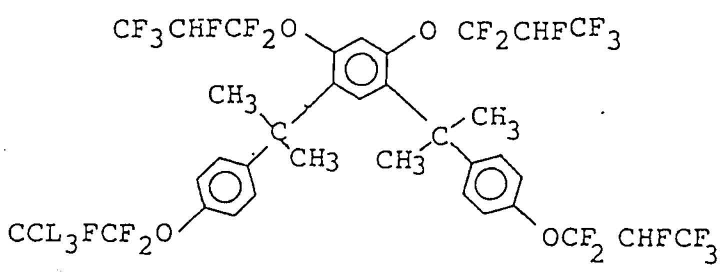

and

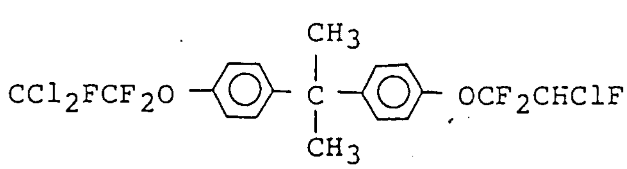

The compounds represented by formula (III) can be advantageously used, individually or in the form of a mixture thereof, as a lubricant for use in a refrigeration system, in which use is made of a refrigerant comprising a fluoroalkane.

Moreover, the compound of formula (III) can be used in the form of a mixture with another lubricant oil.

Examples of the other lubricant oil usable in combination with the compound represented by formula (III), which is

miscible with a fluoroalkane refrigerant to a certain degree, include perfluoropolyether oils, perfluoroether oils having a carbonyl-containing group, such as a carboxyl group, a carboxylate group, an amido group, a ketone group and an ester group, or having a polar group, such as a hydroxyl group, an amino group, an imido group, an ether group, a benzoimidazol group, a phosphite group, a phosphine group, a nitrile group, a phosphotriazine group and a triazine group, chlorofluorocarbon oils, polyalkylene glycol oils, ester oils and fluorinated silicone oils. Appropriate types of oils are selected from these oils, taking into consideration the miscibility with the compound of formula (III) and the viscosity and lubrication characteristics of the resultant lubricating composition.

When the compound of formula (III) is used in the form of a mixture with another lubricant oil, the amount of the compound of formula (III) is chosen, taking into consideration the miscibility of the lubricating composition obtained with a refrigerant and the viscosity of the lubricating composition. Generally, the compound of formula (III) is used in an amount of at least 0.1 % by weight, preferably at least 25 % by weight, and more preferably at least 50 % by weight, based on the total weight of the lubricating composition.

When the compound of formula (III) for use in the present invention is individually used as a lubricant oil for refrigeration equipment in which use is made of a refrigerant comprising a fluoroalkane, it generally has a kinetic viscosity at 40 °C of from 2 to 500 centistokes (hereinafter, referred to as "cst"), preferably from 3 to 300 cst, more preferably from 5 to 170 cst, and most preferably from 10 to 150 cst.

With respect to the kinetic viscosity of the compound of formula (III) at 100 °C, it is generally in the range of from 0.5 to 100 cst, preferably from 1 to 50 cst, and more preferably from 2 to 30 cst.

When the viscosity is too low, satisfactory lubrication properties cannot be obtained under compression conditions. On the other hand, when the viscosity is too high, the rotation torque in a compressor is disadvantageously too high.

When compounds of formula (III) are used in the form of a mixture thereof or when a compound of formula (III) is used in the form of a mixture with another lubricant oil, the viscosity of the compound of formula (III) per se is not particularly limited, as long as the viscosity of the resultant mixture is within the same range as described above with respect to the individual use of the compound of formula (III).

Further, even if the compound of formula (III) is in a solid form, it is useful as long as the kinetic viscosity of a refrigerant composition comprised of the compound and a fluoroalkane refrigerant is nearly equivalent to those of the above-mentioned various refrigerant compositions comprising the compound of formula (III).

In the present invention, the weight ratio of the amount of a refrigerant to the amount of a lubricant oil in a refrigeration system is generally in the range of from 99/1 to 1/99, preferably from 95/5 to 10/90, and more preferably from 90/10 to 20/80.

The lubricant oil for refrigeration equipment may be used with the addition of various additives (which are conventionally known as additives for lubricant oils) in a conventionally employed amount, such as a rust preventive, an antioxidant, a viscosity index improver, a corrosion preventive, an oleophilicity improver, a fluid point depressant and an extreme pressure additive.

The compound represented by formula (III) exhibits an excellent miscibility with a fluoroalkane, such as HFC-134a, over a wide temperature range. For example, whereas the lower limit temperature at which a perfluoropolyether is miscible with a fluoroalkane, such as HFC-134a, is generally about 0 °C or above, the lower limit temperature at which the compound of formula (III) is miscible with a fluoroalkane, such as HFC-134a, can be as low as 0 °C or below, preferably -10 °C or below, more preferably -20 °C or below, still more preferably -30 °C or below, still more preferably -40 °C or below, and most preferably -78 °C or below.

The upper limit temperature at which the compound of formula (III) is miscible with a fluoroalkane, such as HFC-134a, can be as high as 70 °C or above, preferably 80 °C or above, and more preferably 90 °C or above.

By the use of the compound represented by formula (III) or a lubricating composition comprising the com pound (III) as a lubricant oil in refrigeration equipment employing a fluoroalkane refrigerant, such as HFC-134a, it is feasible to overcome both of the drawbacks of the prior art, i.e., (1) the lower limit temperature at which the conventional perfluoropolyether lubricant oils are miscible with fluoroalkanes, such as HFC-134a, being unfavorably high and (2) the miscibility at high temperatures of the conventional hydrocarbon polyalkylene glycol lubricant oil with fluoroalkane, such as HFC-134a, being unfavorably low.

In the testing for stability evaluation (known as sealed tube test) of the compound of formula (III), in which the compound is heated in the presence of a metal, such as copper, brass, aluminium or carbon steel, together with a fluoroalkane, such as HFC-134a, excellent results are obtained such that the compound of formula (III) and the fluoroalkane are stable even at 175 °C, and that the surface of the metal does not show any significant change.

The compound of formula (III) exhibits extremely low moisture absorption, so that it is free from the problems of polyalkylene glycols and ester oils exhibiting a high moisture absorption, such that the electrical properties of the oil are degraded and the decomposition of the fluoroalkane, such as HFC-134a, is accelerated by water.

The lubrication properties of the fluorine-containing aromatic compounds of formula (III) have been evaluated in the presence or absence of a fluoroalkane. As a result, it has been found that, irrespective of the presence or absence of a fluoroalkane, the compounds of formula (III) exhibit markedly excellent extreme pressure property (load at failure), abrasion resistance and coefficient of abrasion.

For example, most of the fluorine-containig aromatic compounds represented by formula (III) exhibit much more excellent lubrication properties than conventional refrigeration equipment oils for a refrigerant, such as a mineral oil, and candidate lubricant oils for refrigeration equipment oil for HFC-134a, such as polyalkylene glycols and polyester oils.

The above-mentioned lubrication properties can be measured by means of various testers. For example, extreme pressure resistance and abrasion resistance can be measured by Falex tester, extreme pressure property can be measured by SODA four-ball abrasion tester, and coefficient of abrasion can be measured by SODA pendulum abrasion tester.

Accordingly, the compound represented by formula (III) or a lubricating composition comprising the compound (III) is useful as a lubricant oil for various types of refrigeration equipment employing as a refrigerant a fluoroalkane which is promising as a substitute for refrigerants, such as R-12 or R-22, for use in refrigerators, freezer, car air conditioners, or the like. The above-mentioned fluoroalkane is a lower fluoroalkane (for example, a fluoroalkane having only 1 to 5 carbon atoms) capable of being employed as a refrigerant, preferably a hydrofluoroalkane having from 1 to 4 carbon atoms, more preferably a hydrofluoroethane, and most preferably HFC-134a. The compound represented by formula (III) or a lubricating composition comprising the compound (III) exhibits excellent miscibilities with various lower fluoroalkanes, such as fluoromethanes, fluoroethanes, fluoropropanes and fluorobutanes, e.g., HFC-134a ($CF_3CH_2F$), HFC-134 ($CHF_2CHF_2$), HFC-152a ($CH_3CHF_2$), HFC-32 ($CH_2F_2$), HFC-125 ($CF_3CHF_2$), $CF_3CH_2CHF_2$, $CF_3CHFCF_3$, $CHF_2CF_2CHF_2$, $CF_3CF_2CF_3$, $CF_3CF_2CF_2CH_3$, $CF_3CHFCHFCF_3$, $CF_3CF_2CH_3$, $CHF_2CF_2CH_2F$ and $CF_3CHFCHFCF_2CF_3$. Accordingly, the above-mentioned compound or composition is useful as a lubricant oil for use in refrigeration equipment employing such fluoroalkane refrigerants.

The compound represented by formula (III) or a lubricating composition comprising the compound (III) and another lubricant oil, the compound (III) being contained in an amount of at least 0.1 % by weight, based on the total weight of the lubricating composition, exhibits an excellent miscibility with a refrigerant mixture (for example, a mixture of tetrafluoroethane and trifluoroethane or a mixture of HFC-32 and HFC-125) comprising a fluoroalkane. Accordingly, the above-mentioned compound or composition is useful as a lubricant oil for refrigeration equipment employing such a refrigerant mixture.

In the present invention, for producing a high purity, fluorine-containing aromatic compound (III), it is preferred to employ a method comprising subjecting a phenol or thiophenol compound represented by the formula:

$$R'(OH)_{n'} \qquad (II)$$

wherein R' and n are as defined above for formula (III)

and an unsubstituted or substituted fluorine-containing olefin to an addition reaction therebetween in the presence of a basic catalyst and a polar solvent, characterized in that the basic catalyst is used in a molar ratio of from 0.01 to 1 relative to the amount of the phenolic hydroxyl group or thiophenolic thiol group of the compound (II) and the addition reaction is performed in the presence of water in a molar ratio of from 0.2 to 100 relative to the amount of the basic catalyst.

As mentioned hereinbefore, the fluorine-containing aromatic compound represented by formula (III) can be produced by various methods, which are not critical in the production thereof. However, generally, it is frequent that impurities having structures similar to that of the desired product are formed as by-products in the manufacturing process. The removal of the impurities are difficult, so that the desired product cannot be easily purified. With respect to the refrigeration equipment oil according to the present invention, any trace amount of impurities contained therein are likely to corrode the metal materials of a refrigeration system, to accelerate the decomposition of a refrigerant and to exert an extremely adverse effect on the required electrical properties (particularly required for a closed type refrigeration equipment, such as a refrigerator), such as volume resistivity, of the oil. Therefore, it is requisite that the refrigeration equipment oil have an extremely high purity.

The present inventors have made extensive and intensive studies on various synthetic methods mentioned hereinbefore with a view toward developing a method for easily synthesizing a high purity, fluorine-containing aromatic compound represented by formula (III) in high yield. As a result, it has been found that a high purity, fluorine-containing aromatic compound can be easily synthesized and isolated by a method in which a phenol or thiophenol compound represented by formula (II) and a fluorine-containing olefin are subjected to an addition reaction in the presence of a basic catalyst and a polar solvent according to the reaction scheme represented by formula [3] above, wherein the basic catalyst is employed in a molar ratio of from 0.01 to 1, and preferably from 0.05 to 0.3, relative to the amount of phenolic hydroxyl groups or thiophenolic thiol groups participating in the reaction of the compound of formula (II), and wherein the addition reaction is performed in the presence of water in a molar ratio of from 0.2 to 100, preferably from 1 to 50, and more preferably from 15 to 50, relative to the amount of the basic catalyst.

As the basic catalyst for use in the above reaction, various bases can be mentioned. Representative examples of bases include alkali metal hydroxides, such as NaOH and KOH, alkali metal bicarbonates, such as $NaHCO_3$ and $KHCO_3$, alkali metal carbonates, such as $Na_2CO_3$ and $K_2CO_3$, amines, such as triethyl amine and tributyl amine, and alkali metal and alkaline earth metals, such as metalic sodium.

The fluorine-containing olefins to be used in the method of the present invention are not specifically limited as long as they permit a nucleophilic addition of a phenoxy anion or a thiophenoxy anion. Examples of these olefins include perfluoroolefins or chlorofluoroolefins disclosed in Advance in Fluorine Chemistry, 4, 50(1965), such as $CF_2 = CF_2$, $CF_2 = CFCF_3$ and CF2 = CCIF, various fluorine-containing olefin oligomers represented by formulae [11] and [12], and perfluorovinyl ethers.

In the reaction according to the method of the present invention, various polar solvents can be employed. Representative examples thereof include dimethyl sulfoxide, dimethylformamide, sulfolane, N-methylpyrrolidone, acetone, tetrahydrofuran, dioxane, tetraglyme and dimethoxyethane. The amount of polar solvent used is not particularly limited. However, generally, the polar solvent is added in an amount of from 10 to 1000 % by weight, based on the weight of the phenol or thiophenol used in the reaction.

The reaction temperature is generally in the range of from 0 to 150 °C, preferably from 40 to 100 °C, and the reaction pressure is generally in the range of from 0.1 to 20 atm., preferably from 0.1 to 10 atm.

The basic catalyst is used in a molar ratio of from 0.01 to 1, preferably from 0.05 to 0.3 relative to the amount of a member selected from the phenolic hydroxyl group and the thiophenolic thiol group contained in a phenol and a thiophenol, respectively, and each participating in the addition reaction.

Water is used in a molar ratio of from 0.2 to 100, preferably from 1 to 50, more preferably from 15 to 50, relative to the amount of the basic catalyst. When water is used in too low a molar ratio, the selectivity for the desired product is low. On the other hand, when water is used in too high a molar ratio, the reaction rate is too slow to be practical.

In the above-mentioned method for obtaining a high purity compound (III), when the reaction is conducted with a sufficient amount of water, there is another advantage in that after completion of the reaction, a reaction mixture separates into an oil phase mainly comprised of the oil represented by formula (III), i.e., the desired product, and a catalyst phase mainly comprised of a polar solvent, water and a basic catalyst, to thereby facilitate separation of the desired product from the reaction mixture, so that the separated catalyst phase as such can be recycled for reuse.

In the utilization of the fluorine-containing aromatic compound represented by formula (III) as a lubricant oil for use in a refrigeration system, electrical properties are important besides miscibility, lubrication properties and durability. In particular, the lubricant oil for closed refrigeration equipment, e.g., refrigeration equipment for a refrigerator etc., must have excellent insulation properties. That is, it must have a volume resistivity of generally at least $10^{11}$ Ωcm, preferably at least $10^{12}$ Ωcm, and most preferably at least $10^{13}$ Ωcm.

The desired fluorine-containing aromatic compound can be produced in high selectivity by the synthetic methods described above, so that it can be isolated in high purity (for example, 99.9 % by weight or above) by washing with water or distillation technique (for example, simple distillation). However, it often occurs that the electrical properties, such as volume resistivity, of the isolated product is poor due to the presence of a trace amount of impurities.

The present inventors have made studies on various treatments for improving the electrical properties. As a result, the following effective treatment has been found. That is, it has been found that a high purity, fluorine-containing aromatic compound improved in electrical properties, e.g., having a volume resistivity of $10^{12}\Omega$ or higher, or of $10^{13}\Omega$ or higher can be easily obtained by contacting a fluorine-containing aromatic compound produced according to the method described above with at least one inorganic or organic adsorbent capable of adsorbing various polar substances, selected from the group consisting of silica gel, zeolite, fuller's earth, activated clay, bauxite, almina, magnesia, charcoal, boneblack, activated carbon, and ion exchangers, such as alumina-silicate gel or zirconium oxide gel, preferably selected from the group consisting of activated carbon, silica gel, activated alumina, silica-almina, activated clay and zeolite, and more preferably from the group consisting of activated carbon, silica gel and zeolite.

The purification method may comprise dispersing the above-mentioned absorbent in a fluorine-containing aromatic compound or a solution thereof, or may comprise passing a fluorine-containing aromatic compound or a solution thereof through a column packed with the above-mentioned absorbent.

By the use of such a method, a fluorine-containing aromatic compound can be easily obtained, which has an extremely high purity (e.g., 99.9 % or above), so that the obtained compound does not adversely affect metal materials and refrigerants and exhibits excellent electrical properties.

Best Mode for Carrying Out the Invention

The present invention will now be described in detail with reference to the following examples that by no means limit the scope of the invention.

The kinetic viscosity of the lubricant oil for use in the present invention can be determined by measuring the viscosity by means of various viscometers. As the viscometer to be used for determining the kinetic viscosity, there can be mentioned a capillary viscometer, such as a Ubbellohde viscometer, an Ostward viscometer or a Cannon-Fenske viscometer, a rotational viscometer, and a falling ball viscometer. In the present invention, an E-type rotational viscometer (manufactured by Tokyo Keiki, Japan) and a Cannon-Fenske viscometer were used.

Referential Example 1

6.2 g of potassium hydroxide was dissolved in 200 ml of methanol. To the resultant solution was gradually added 200 ml of a methanol solution containing 12.7 g of 2,2-bis(4-hydroxyphenyl)propane (hereinafter referred to simply as "bisphenol A"), followed by agitation at room temperature for about one hour, to effect a reaction. After the reaction, the methanol was distilled off to thereby obtain 18.9 g of potassium alkoxide of bisphenol A. 18.9 g of the thus obtained potassium alkoxide and 56.0 g of bisphenol A were dissolved in 200 ml of dimethylsulfoxide, and the resultant solution was charged into a microcylinder having a capacity of 500 ml as a reactor. The inside of the reactor was degassed and then, inert gas $N_2$ was charged to restore atmospheric pressure. The reactor was heated to 60 °C by means of an oil bath, followed by introduction of chlorotrifluoroethylene, thereby starting a reaction. While feeding chlorotrifluoroethylene so as to maintain the pressure in the reactor (gauge pressure) at 2 to 3 kg/cm$^2$, reaction was carried out for about 5 hours. The solution obtained as a result of the reaction was charged into a large volume of water to separate a reaction product. 500 ml of 1,1,2-trichloro-1,2,2-trifluoroethane (hereinafter referred to simply as "CFC-113") was added to the separated reaction product. The resultant CFC-113 phase was washed with distilled water twice, followed by drying to thereby achieve solvent removal. Thus, 131 g of a colorless, transparent oil (containing 91.5 % by weight of oil [S1]) was obtained.

Simple distillation (the boiling point was 180 °C under 0.02 mmHg) and subsequently, separation treatment using a silica gel column were conducted to thereby isolate the oil [S1].

The thus obtained oil [S1] was analyzed by infrared absorption spectrometry, mass spectrometry [m/e460, 462 ($M^+$) 445, 447 ($M^+$-$CH_3$)] and $^{19}$F-NMR spectrometry to thereby confirm that the oil [S1] was a compound having the following structural formula:

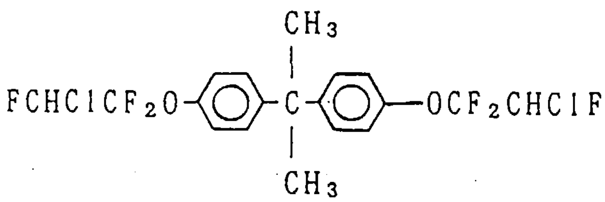

[S 1].

$^{19}$F-NMR spectrum (ppm from $CF_3COOH$): 78(2F), 7.5(4F).

Referential Example 2

The same procedure as in Referential Example 1 was repeated, except that tetrafluoroethylene was used in place of chlorotrifluoroethylene, to thereby obtain 113 g of a colorless, transparent oil (containing 90.1 % by weight of oil [S2]).

Simple distillation (the boiling point was 160 °C under 0.20 mmHg) and subsequently, separation treatment using a silica gel column were conducted to thereby isolate the oil [S2].

The thus obtained oil [S2] was analyzed by infrared absorption spectrometry, mass spectrometry [m/e392 ($M^+$), 377 ($M^+$-$CH_3$)] and $^{19}$F-NMR spectrometry to thereby confirm that the oil [S2] was a compound having the following structural formula:

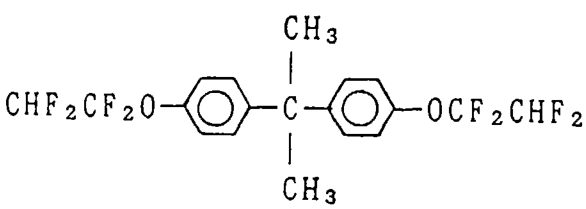

[S 2]

Referential Example 3

10 g of bisphenol A was dissolved in 10 ml of tetrahydrofuran to obtain a solution, and 10 g of triethylamine was added to the solution. The resultant mixture was charged into a microcylinder having a capacity of 200 ml. The microcylinder was cooled to -78 °C, followed by evacuation of the inside of the microcylinder. Thereafter, 60 g of hexafluoropropene was introduced thereinto, followed by heating to 60 °C to conduct a reaction for 5 hours. After the reaction, the tetrahydrofuran and any excess triethylamine were removed by means of an evaporator to obtain a reaction mixture. To the thus obtained reaction mixture was added 100 ml of R-113 to obtain a solution, followed by washing with diluted hydrochloric acid once and washing with distilled water twice.

Solvent removal from the resultant R-113 phase was achieved by means of an evaporator, thereby obtaining 12 g of colorless, transparent mixture of the oil [S3] (yield: 55 %). The thus obtained mixture was analyzed using gas chromatography to recognize several absorption peaks. Accordingly, the mixture of oil [S3] was subjected to separation treatment using a silica gel column, and a sample obtained from each fraction was analyzed by mass spectrometry, infrared absorption spectrometry and $^{19}$F-NMR spectrometry (see Table 1).

Table 1

| | | | MS m/e | IR $cm^{-1}$ | $^{19}F$-NMR p,p,m. a) | | |
|---|---|---|---|---|---|---|---|
| [S3] | | 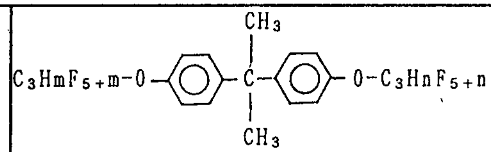 | | | | | |
| [A] | m=0<br>n=0 | 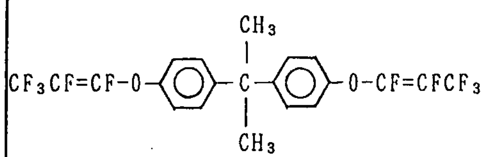<br>cis-cis isomer, cis-trans isomer, trans-trans isomer | 488($M^+$)<br>473($M^+-CH_3$) | -CF=CF<br>1760 | trans<br>-8.7(6F)<br>30 (2F)<br>110 (2F) | cis<br>-9.0(6F)<br>14.0(2F)<br>104 (2F) | |
| [B] | m=1<br>n=0 | 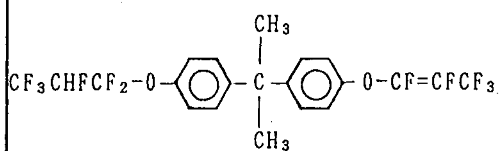<br>cis isomer, trans isomer | 508($M^+$)<br>493($M^+-CH_3$) | -CF=CF<br>1760 | -0.7 (3F)<br>1.2,3.9(2F)<br>136 (1F) | trans<br>-8.7(3F)<br>30 (1F)<br>110 (1F) | cis<br>-9.0(3F)<br>14.0(1F)<br>104 (1F) |
| [C] | m=1<br>n=1 | 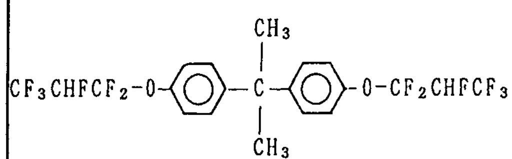 | 528($M^+$)<br>513($M^+-CH_3$) | | -0.7(6F)<br>1.2,3.9(4F)<br>136 (2F) | | |

a) Internal standard: $CF_3COOH$

As a result, it was confirmed that the oil [S3] is a mixture of compounds [A], [B] and [C] (molar ratio of A/B/C = 4/4/2) indicated in Table 1, that the compound [A] contains a cis-cis isomer, a cis-trans isomer and a trans-trans isomer which are geometrical isomers of a pentafluoropropenyl group, and that the compound [B] likewise contains a cis isomer and

a trans isomer.

Referential Example 4

17 g of potassium alkoxide of bisphenol A which was synthesized by substantially the same procedure as in Referential Example 1, was dissolved in 100 ml of dimethylsulfoxide to obtain a solution, and to the solution was added 28 g of R-113. The resultant mixture was heated to 60 °C and reacted for about 5 hours.

After the reaction, the resultant solution was charged into a large volume of water to separate a reaction product. To the reaction product was added 100 ml of R-113. Phase separation occurred, and the resultant R-113 phase was washed with distilled water twice, followed by solvent removal, thereby obtaining 13.4 g of colorless, transparent oil [S4] (yield: 28.5 %).

The thus obtained oil was analyzed by gas chromatography to recognize three absorption peaks. The oil [S4] was subjected to separation treatment using a silica gel column, and a sample obtained from each fraction was analyzed by mass spectrometry, infrared absorption spectrometry and $^{19}$F-NMR spectrometry. The results are shown in Table 2. Thus, the oil [S4] was confirmed to be a mixture of compounds [D], [E] and [F] (molar ratio of D/E/F = 3/5/2).

Table 2

| [S4] | | 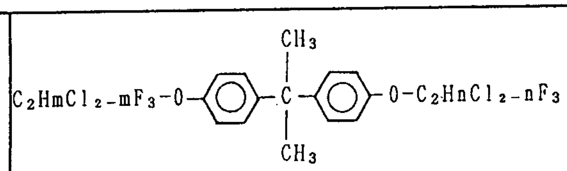 | MS (m/e) | | $^{19}$F-NMR p,p,m a) | |
|---|---|---|---|---|---|---|
| [D] | m=0 n=0 | 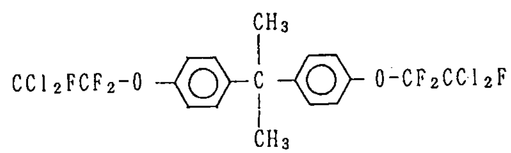 | 528 ($M^+$) 513 ($M^+$-15) 530 ($M^+$) 515 ($M^+$-15) | 532 ($M^+$) 517 ($M^+$-15) 534 ($M^+$) 519 ($M^+$-15) | -2.5 (2F) 8.5 (4F) | |
| [E] | m=1 n=0 | 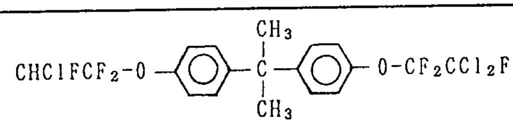 | 494 ($M^+$) 479 ($M^+$-15) 496 ($M^+$) 481 ($M^+$-15) | 498 ($M^+$) 483 ($M^+$-15) | -2.5 (1F) 8.5 (2F) | 7.8 (1F) 7.5 (2F) |
| [F] | m=1 n=1 | 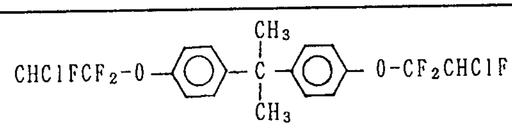 | 460 ($M^+$) 445 ($M^+$-15) | 462 ($M^+$) 447 ($M^+$-15) | 78 (2F) 7.5 (4F) | |

a) Internal standard: $CF_3COOH$

Referential Example 5

The same procedure as in Referential Example 1 was repeated, except that 2,2-bis(4-hydroxy-3-methylphenyl) propane was used in place of bisphenol A and tetrafluoroethylene was used in place of chlorotrifluoroethylene, to thereby obtain oil [S5] (yield: 77 %). The oil [S5] was analyzed by infrared absorption spectrometry and mass spectrometry [m/e456 ($M^+$), 441 ($M^+$-$CH_3$)] to thereby confirm that the oil [S5] was a compound having the following structural formula:

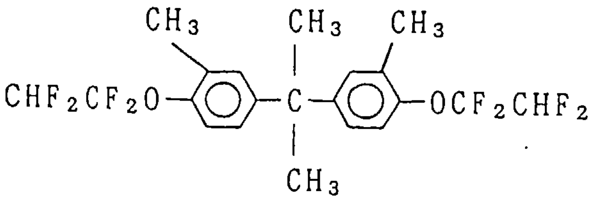

[S5]

Referential Example 6

Oil [S6] was obtained by the same procedure as in Referential Example 3, except that 2,2-bis(3,5-dimethyl-4-hydroxyphenyl)propane was used in place of bisphenol A (yield: 46 %). From the results of infrared absorption spectrometry and mass spectrometry, it was confirmed that the oil [S6] was a compound having the following structural formula:

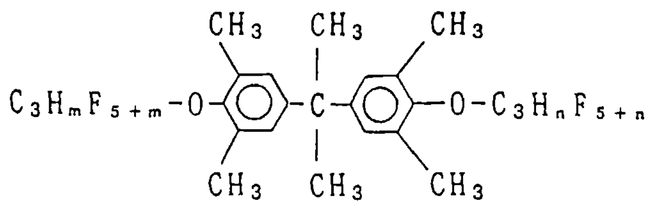

[S6]

wherein m=0 or 1 and n=0 or 1.

Referential Example 7

7.1 g of sodium hydroxide was dissolved in 20.7 g of water to obtain a solution, and to the solution were added 4.0 g of bisphenol A and 13.8 g of dimethylsulfoxide. The resultant mixture was charged into a microcylinder having a capacity of 100 ml. The microcylinder was cooled to -78 °C, and the inside thereof was evacuated, followed by introduction thereinto of 7.8 g of chlorodifluoromethane (R22) to effect a reaction at 70 °C for 10 hours. After the reaction, the resultant solution was charged into a large volume of water to separate a reaction product. To the reaction product was added 100 ml of R-113.

The resultant R-113 phase as a sublayer was washed with distilled water twice, followed by purification using a silica gel column, and then the solvent was removed. Thus, 1.1 g of oil [S7] was obtained (yield: 18 %).

From the results of mass spectrometry [m/e328 ($M^+$), 313 ($M^+$-$CH_3$)] and infrared absorption spectrometry, it was confirmed that the oil [S7] has the following structural formula:

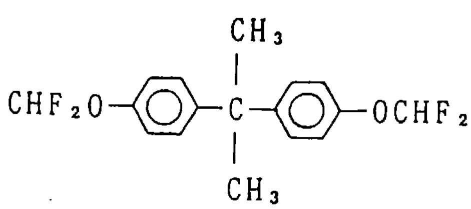

[S7].

Referential Example 8

10.8 g of the oil [S3] obtained in Referential Example 3 was charged into a microcylinder having a capacity of 200 ml, and 5.4 g of sulfuryl chloride $SO_2Cl_2$ was added thereto. A reaction was carried out at 100 °C for 4 days. After the reaction, the resultant solution was charged into a large volume of water to separate a reaction product. To the reaction product was added 100 ml of Freon 113 to dissolve the same and then, a lower phase was separated. The phase was washed with a 10 % aqueous solution of sodium bicarbonate and then with distilled water, followed by purification using a silica gel column. Thus, 9.65 g of an oily substance was obtained. In an infrared absorption spectrum thereof, the absorption at 1759 $cm^{-1}$ ascribed to the stretching vibration of -CF=CF- of the oil [S3] disappeared, demonstrating the formation of a chlorine adduct like the following substance [S8]:

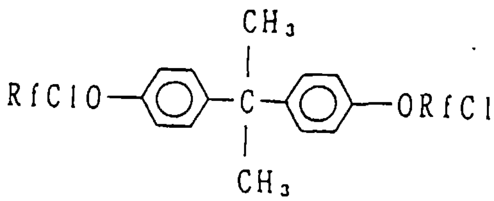

[S8]

wherein RfCl represents $-CClFCC1FCF_3$ or $-CF_2CHFCF_3$.

Referential Example 9

7 g of sodium boron hydride $NaBH_4$ was suspended in 100 ml of dimethylsulfoxide to obtain a suspension, and to the suspension was added 8 g of the mixture [S4] obtained in Referential Example 4. A reaction was carried out at 85 °C for 16 hours. After the reaction, the dimethylsulfoxide was removed by an evaporator to obtain a reaction mixture. To the reaction mixture was added 100 ml of R-113, thereby obtaining a solution. The thus obtained solution was washed with distilled water and then, the resultant R-113 phase was purified using a silica gel column, thereby obtaining 3.5 g of colorless, transparent oil [S9] (yield: 55 %).

From the results of gas chromatography and mass spectrometry [m/e428 ($M^+$), 413 ($M^+$-$CH_3$)], it was confirmed that the obtained oil [S9] was a compound having the following structural formula:

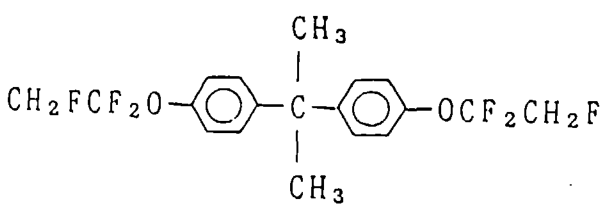

[S9].

Referential Example 10

Oil [S10] was obtained according to the same procedure as in Referential Example 3, except that 2,6-dimethyl-2,4,6-tri(4-hydroxyphenyl)-3-heptene was used in place of bisphenol A (yield: 93 %). From the results of gas chromatography and mass spectrometry, the molar ratio of saturated groups to unsaturated groups was $-CF_2CHFCF_3$/$-CF=CF-CF_3$ = 42/58:

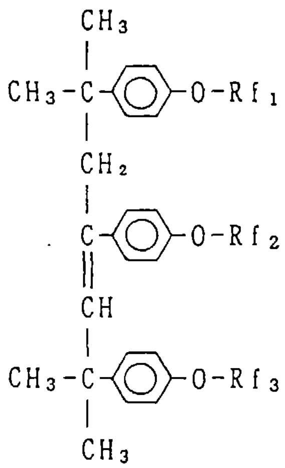

[S10]

wherein $Rf_1$, $Rf_2$ and $Rf_3$ each independently represent $-CF_2CHFCF_3$ or $-CF=CF-CF_3$.

Referential Example 11

Oil [S11] was obtained according to the same procedure as in Referential Example 3, except that compound [G11] was used in place of bisphenol A (yield: 70 %). From the results of gas chromatography and mass spectrometry, the molar ratio of saturated groups to unsaturated groups was $-CF_2CHFCF_3/-CF=CF-CF_3$ = 46/54:

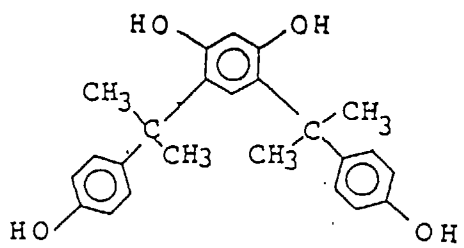

[G11]

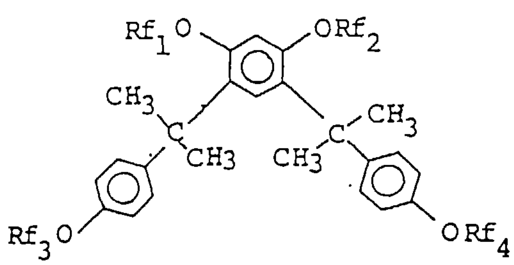

[S11]

wherein $Rf_1$, $Rf_2$, $Rf_3$ and $Rf_4$ each independently represent $-CF_2CHFCF_3$ or $-CF=CF-CF_3$.

Referential Example 12

Substance [S12-1] in a solid form was obtained by the same procedure as in Referential Example 4, except that 1,1-difluoro-1,2,2,2-tetrachloroethane was used in place of R-113 (yield: 55 %).

9 g of lithium aluminum hydride was suspended in 200 ml of tetrahydrofuran to thereby obtain a suspension, and to the suspension was added 11 g of the oil [S12-1]. A reaction was carried out at room temperature for 5 hours, and further at 65 °C for 5 days. After the reaction, the tetrahydrofuran was distilled off and, then, 100 ml of toluene was added thereto to obtain a solution. The thus obtained solution was washed with distilled water, followed by purification of the resultant toluene phase using a silica gel column, thereby obtaining 3.5 g of colorless, transparent oil [S12-2] (yield: 50 %).

From the results of infrared absorption spectrometry and mass spectrometry, it was confirmed that the oils [S12-1] and [S12-2] were compounds represented by following structural formulae, respectively:

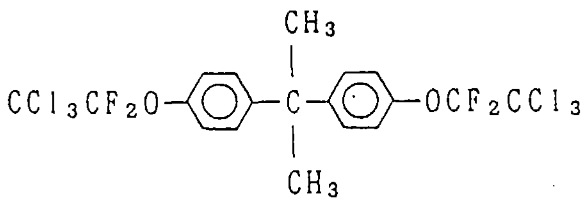

[S12-1]

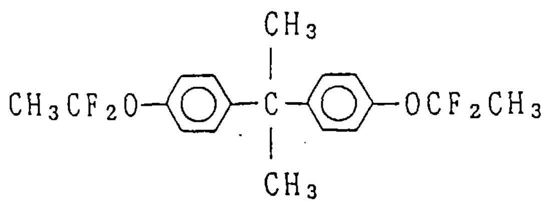

[S12-2]

[m/e 356 ($M^+$), 341 ($M^+$-$CH_3$)].

Referential Example 13

To 60 ml of a dichloromethane solution in which 7.9 g of 2,2-bis[p-(2-hydroxyethoxy)phenyl]propane was dissolved was dropwise added a solution obtained by diluting 13 g of hexafluoropropenediethylamine with dichloromethane at a temperature of from 0 to 5 °C. A reaction was carried out at room temperature for 4 hours. After the reaction, the reaction mixture was charged into a 10 % by weight aqueous potassium carbonate solution and, then, the resultant oil phase was washed with water, followed by drying over sodium sulfate. Thereafter, the oil phase was subjected to fractional distillation, thereby obtaining 1.0 g of a colorless, transparent oily substance [S13].

From the results of infrared absorption spectrometry and mass spectrometry [m/e320 ($M^+$), 305 ($M^+$-$CH_3$)], it was confirmed that the substance [S13] was a compound represented by the following structural formula:

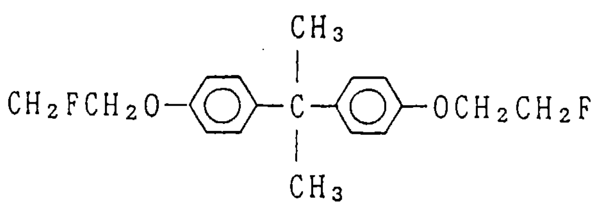

[S13].

Referential Example 14

13.3 g of alkoxide of bisphenol A synthesized by substantially the same procedure as in Referential Example 1 was reacted with 30.0 g of ethyl p-toluenesulfonate in 200 ml of dimethylsulfoxide as a solvent. After the reaction, the solvent was distilled off, and the reaction product remaining unevaporated was purified using a silica gel column, thereby obtaining 6.0 g of white compound [S14] in a solid form.

From the results of infrared absorption spectrometry and mass spectrometry [m/e284 ($M^+$), 269 ($M^+$-$CH_3$)], it was confirmed that the compound [S14] was a compound represented by the following structural formula:

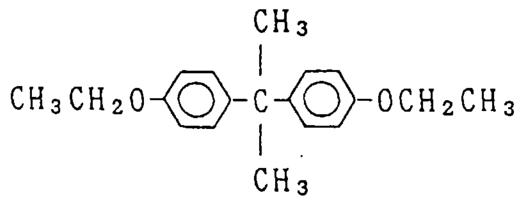

[S14].

Example 1

⟨Miscibility Test⟩

The miscibility of the oil [S1] obtained in Referential Example 1 with each of various fluoroalkanes (HFC-134a, HFC-134, and HFC-152a) was evaluated by the following method.

First, 0.2 g of the oil [S1] was charged into a glass tube and then, the whole was cooled by liquid nitrogen. The interior of the glass tube was evacuated and, about 1.5 g of HFC-134a was introduced into the glass tube. The glass tube was sealed and placed in a temperature-controlled water bath. When the temperature was equilibriated, in the manner in which the miscibility of the oil [S1] with the fluoroalkane was visually evaluated, a miscibility limit was measured in the temperature range of from room temperature to 90 °C. A lower miscibility limit at temperatures lower than room temperature was likewise measured by cooling with a methanol cooling medium. The results are shown in Table 3 together with the results of Comparative Example 1.

The kinetic viscosities of the oil [S1] at 40 °C and 100 °C were measured, which were 56.8 cSt and 5.34 cSt, respectively.

Example 2

The miscibility of the oil [S2] obtained in Referential Example 2 with each of the various fluoroalkanes mentioned above was evaluated in the same manner as in Example 1. The results are shown in Table 3 together with the results of Comparative Example 1.

The kinetic viscosities of the oil [S2] at 40 °C and 100 °C were 26.2 cSt and 3.40 cSt, respectively.

Table 3

| | | | Temperature range for being miscible with HFC-134a | | Temperature range for being miscible with HFC-134 | | Temperature range for being miscible with HFC-152a | |
|---|---|---|---|---|---|---|---|---|
| | Lubricant | Kinetic viscosity (cSt)40°C | lower limit temperature (°C) | upper limit temperature (°C) | lower limit temperature (°C) | upper limit temperature (°C) | lower limit temperature (°C) | upper limit temperature (°C) |
| Ex. 1 | [S1] | 57 | -50 | 90 or above | -60 | 90 or above | -78 or below | 90 or above |
| Ex. 2 | [S2] | 26 | -78 or below | 90 or above | -78 or below | 90 or above | -78 or below | 90 or above |
| Comp. Ex. 1 | Fomblin® Y-06 *1 (Mn=1800) | 27 | -5 | 90 or above | 55 | 90 or above | 55 | 90 or above |
| Comp. Ex. 2 | Fomblin® Y-25 *1 (Mn=3000) | 94 | 12 | 90 or above | 65 | 90 or above | immiscible *2 | immiscible *2 |
| Comp. Ex. 3 | Fomblin® Y-45 *1 (Mn=4000) | 165 | 65 | 90 or above | immiscible *2 | immiscible *2 | immiscible *2 | immiscible *2 |
| Comp. Ex. 4 | | solid | immiscible *2 | immiscible *2 | -1 | 90 or above | immiscible *2 | immiscible *2 |

*1: $CF_3O(CF_2CF_2O)_{m1}(CF_2O)_{m2}$ $CF_3$, manufactured by Montefluos, Italy

*2: immiscible in the temperature range (-78°C to 90°C) for miscibility evaluation

Comparative Examples 1 through 4

The miscibilities of commercially available perfluoropolyether and 2,2-bis(4-ethoxyphenyl)propane with each of the

above various fluoroalkane were evaluated, in substantially the same manner as in Example 1. The results are shown in Table 3 together with data of the kinetic viscosity at 40 °C.

In Tables 3, 4, 10, 11 and 13, $\overline{Mn}$ means the number average molecular weight, and n and $m_1$ through $m_n$ each represent a positive integer.

Comparative Examples 5 through 8

The miscibilities of commercially available perfluoropolyether and polyoxyalkylene glycol with HFC-134a were evaluated in substantially the same manner as in Example 1. The results are shown in Table 4 together with data of the kinetic viscosity at 40 °C.

Table 4

| | Lubricant | Number average molecular weight | Kinetic viscosity (cSt) at 40°C | Temperature range for being miscible with HFC-134a | |
|---|---|---|---|---|---|
| | | | | lower limit temperature (°C) | upper limit temperature (°C) |
| Comp. Ex. 5 | KRYTOX® 143AY *1 | 3000 | 50 | 5 | 90 or above |
| Comp. Ex. 6 | DEMNUM® S-20 *2 | 2700 | 25 | -5 | 90 or above |
| Comp. Ex. 7 | $CH_3$<br>\|<br>$HO(CHCH_2O)_nH$ | 1000 | 73 | -78 or below | 62 |
| Comp. Ex. 8 | $CH_3$<br>\|<br>$HO(CHCH_2O)_nH$ | 2000 | 171 | -60 | 0 |

*1: $CF_3$
|
$F(CFCF_2O)_{m1}CF_2CF_3$, manufactured by E.I. Du Pont De NEMOURS AND COMPANY, U.S.A.

*2: $F(CF_2CF_2CF_2O)_{m2}CF_2CF_3$, manufactured by Daikin Industries, Ltd., Japan

From Tables 3 and 4, the following is found with respect to the miscibility with various fluoroalkanes. That is, the miscibility of the commercially available perfluoropolyether is unsatisfactory with respect to the low temperature range, and on the other hand, the miscibility of the polyoxyalkylene glycol is inferior in the high temperature range.

By contrast, the oil obtained by the present invention exhibits excellent miscibilities with various fluoroalkanes in a wide temperature range of from low to high temperatures. Further, [S14], i.e. a compound indicated in Comparative Example 4, and having a structure similar to that of the oil obtained by the present invention but containing no fluorine atoms, exhibits little miscibility with fluoroalkanes, such as HFC-134a. As apparent from these facts, for exhibiting miscibility, it is requisite that an alkyl group linked to an aromatic group through an ether linkage contain fluorine atoms.

Examples 3 through 13

The miscibility of each of various oils obtained in Referential Examples 3 through 12 with HFC-134a was evaluated in substantially the same manner as in Example 1. The results are shown in Table 5 together with data of the kinetic viscosity at 40 °C.

Table 5

| Example | Lubricant oil | Kinetic viscosity (cSt)40°C | Temperature range for being miscible with HFC-134a | |
|---|---|---|---|---|
| | | | lower limit temperature (°C) | upper limit temperature (°C) |
| 3 | [S3] | 14 | -78 or below | 90 or above |
| 4 | [S3-C] | 28 | -78 or below | 90 or above |
| 5 | [S4] | 69 | -21 | 90 or above |
| 6 | [S5] | 115 | -78 or below | 90 or above |
| 7 | [S6] | 113 | -78 or below | 90 or above |
| 8 | [S7] | 4 | -78 or below | 90 or above |
| 9 | [S8] | 32 | -78 or below | 90 or above |
| 10 | [S9] | 50 | -78 or below | 90 or above |
| 11 | [S10] | 2000 | -48 | 90 or above |
| 12 | [S11] | 1300 | -78 or below | 90 or above |
| 13 | [S12- 2 ] | 33 | -55 | 90 or above |

Examples 14 through 16

Oils were prepared by mixing in various weight ratios the oil [S5] obtained in Referential Example 5 and the oil [S2] obtained in Referential Example 2, and the miscibility of each of the oils with HFC-134a was evaluated in substantially the same manner as in Example 1. The results are shown in Table 6 together with data of the kinetic viscosity at 40 °C.

Examples 17 and 18

Oils were prepared by mixing in various weight ratios the substance [S4-D] in a solid form at 10 °C which was obtained in Referential Example 4 and the oil [S2] obtained in Referential Example 2, and the miscibility of each of the oils with HFC-134a was evaluated in substantially the same manner as in Example 1. The results are shown in Table 7 together with data of the kinetic viscosity at 40 °C.

Examples 19 through 22

Oils were prepared by mixing in various weight ratios the oil [S6] obtained in Referential Example 6 and the oil [S3] obtained in Referential Example 3, and the miscibility of each of the oils with HFC-134a was evaluated in substantially the same manner as in Example 1. The results are shown in Table 8 together with data of the kinetic viscosity at 40 °C.

Table 6

| Example | Weight ratio of [S5]/[S2] | Kinetic viscosity (cSt)40°C | Temperature range for being miscible with HFC-134a | |
|---|---|---|---|---|
| | | | lower limit temperature (°C) | upper limit temperature (°C) |
| 14 | 25/75 | 41 | -78 or below | 90 or above |
| 15 | 50/50 | 57 | -78 or below | 90 or above |
| 16 | 75/25 | 83 | -78 or below | 90 or above |

Table 7

| Example | Weight ratio of [S4-D]/[S2] | Kinetic viscosity (cSt)40°C | Temperature range for being miscible with HFC-134a | |
|---|---|---|---|---|
| | | | lower limit temperature (°C) | upper limit temperature (°C) |
| 17 | 25/75 | 34 | -73 | 90 or above |
| 18 | 50/50 | 60 | -43 | 90 or above |

Table 8

| Example | Weight ratio of [S7]/[S3] | Kinetic viscosity (cSt)40°C | Temperature range for being miscible with HFC-134a | |
|---|---|---|---|---|
| | | | lower limit temperature (°C) | upper limit temperature (°C) |
| 19 | 20/80 | 20 | -78 or below | 90 or above |
| 20 | 50/50 | 43 | -78 or below | 90 or above |
| 21 | 60/40 | 55 | -78 or below | 90 or above |
| 22 | 70/30 | 83 | -78 or below | 90 or above |

Example 23

The oil [S2] obtained in Referential Example 2 and polypropylene glycol (the number average molecular weight $\overline{Mn}$ = 1000) were mixed in a weight ratio of [S2]/polypropylene glycol = 50/50 to thereby obtain an oil. The miscibility of the thus obtained oil with HFC-134a was evaluated in substantially the same manner as in Example 1. It was found that the lower limit temperature for the oil to be miscible with HFC-134a was -70 °C, and that the upper limit temperature for the oil to be miscible with HFC-134a was 85 °C. Further, the kinetic viscosity of the mixed oil at 40 °C exhibited 77.7 cSt. The lower limit temperature and the upper limit temperature for polypropylene glycol to be miscible with HFC-134a are not higher than -78 °C and 62 °C, respectively. It is apparent that the miscibility (upper limit temperature) of polypropylene glycol with HFC-134a has been improved by mixing the polypropylene glycol with the oil [S2].

Example 24

An oil was prepared by mixing the oil [S2] obtained in Referential Example 2 and ester oil (Unister$^R$ H407R, manufactured by Nippon Oil Fats Co., Ltd., Japan) in a weight ratio of [S2]/ester oil = 50/50, and the miscibility thereof with HFC-134a was evaluated in substantially the same manner as in Example 1. From the results, it was found that the lower limit temperature and the upper limit temperature for the oil to be miscible with HFC-134a were -28 °C and not lower than 90 °C, respectively. Further, the kinetic viscosity at 40 °C was 28.7 cSt. Unister® H-407R is a full ester obtained by a reaction of pentaerythritol with a synthetic fatty acid having seven carbon atoms, and the kinetic viscosity thereof is 21.9 cSt at 40 °C. Further, the lower limit temperature and the upper limit temperature for Unister® H407R to be miscible with HFC-134a is -1 °C and 85 °C, respectively. From these results, it is apparent that the miscibility (lower limit temperature) of Unister® H407R has been improved by mixing with the oil [S2].

Examples 25 through 30

〈Evaluation of Heat Resistance (Sealed Tube Test)〉

A glass tube was charged with 0.6 ml of purified oil [S1], HFC-134a and test pieces of steal copper and aluminum, and the glass tube was then sealed to enclose a refrigerant composition therein. The refrigerant composition was heated at 175 °C for 10 days. After the heating, any change of the hue of the refrigerant composition and any change of the surfaces of the metal pieces were examined. It was found that the hue of the refrigerant composition and the surfaces of the metals were both not changed. Furthermore, the viscosity and infrared absorption spectrum of the oil [S1] were not changed at all.

The heat resistances of various compounds of the present invention were evaluated according to the sealed tube test in the same manner as described above. The results are shown in Table 9. It was found that the compounds of the present invention have a satisfactorily high heat resistance.

Table 9

| | | After sealed tube test | | | |
|---|---|---|---|---|---|
| Example | Lubricant oil | hue | viscosity | IR | metal surface |
| 25 | [S1] | not changed | not changed | not changed | not changed |
| 26 | [S2] | not changed | not changed | not changed | not changed |
| 27 | [S3] | not changed | not changed | not changed | not changed |
| 28 | [S3-C] | not changed | not changed | not changed | not changed |
| 29 | [S4] | not changed | not changed | not changed | not changed |
| 30 | [S5] | not changed | not changed | not changed | not changed |

Examples 31 and 32

〈Lubrication Test (Falex Test)〉

Use was made of a Falex tester. Under conditions such that the oil temperature at the start of the testing was 20 °C and a load of 300 pounds was applied, the tester was driven for 3 minutes. While increasing the load, 100 pounds by 100 pounds, the tester was driven for 1 minute under each load until seizing was caused. By this method, the seizing loads of various compounds of the present invention were measured.

Abrasion losses were measured in the following method. In the same manner as in the measurement of seizing loads, first, a refrigerant gas (HFC-134a) was blown into an oil to be measured at a blow rate of about 10 liter/hour for about 15 minutes. Further, under conditions such that the oil temperature at the start of the testing was 20 °C and a load of 250 pounds was applied, the tester was driven for 5 minutes while continuing the gas blowing. The load was increased to 400 pounds, and the tester was driven for 30 minutes while pressurizing and regulating the load by means of a gear so as to maintain 400 pounds. Thereafter, the load was lowered to 100 pounds, and the difference between the number of gear teeth when a load of 400 pounds was applied and that when initial setting was effected was employed as a measure.

(SODA testing using four balls)

Use was made of SODA tester using four balls. Under conditions such that the oil temperature at the start of testing was 20 °C, a load oil pressure was increased at a rate of 49.0 kPa (0.5 kgf/$cm^2$) per minute, at 200 rpm until seizing was caused, thereby obtaining an acceptance limit (oil pressure).

(SODA testing using pendulum)

Use was made of SODA tester using pendulum, under conditions such that the oil temperature at the start of testing was 20 °C.

The measurement results obtained according to the methods described above with respect to the seizing load, the abrasion loss and the friction factor of each of the various oils to be used in the present invention, are shown in Table 10, together with the results of Comparative Examples 9 through 12.

<u>Comparative Examples 9 through 12</u>

The seizing load, the abrasion loss and the friction factor of each of commercially available mineral oil, polyoxyalkylene glycol, ester oil and turbine oil, were measured in substantially the same manner as in Examples 31 and 32. The results are shown in Table 10.

From Table 10, it is seen that all of the oils obtained by the present invention are more excellent in all of extreme-pressure properties, abrasion resistance and friction factor than any of mineral oil as a lubricant oil for CFC-12 (SUNISO® 3GS, manufactured by Nippon San Sekiyu, Japan), a polyoxyalkylene glycol and an ester oil as candidate oils for a refrigeration equipment oil for HFC-134a, and high-performance lubricant oil containing various additives (Tellus Oil® 32, manufactured by Showa Shell Sekiyu K.K., Japan). Therefore, various oils of the present invention are useful not only as a refrigeration equipment oil but also as a general purpose lubricant oil.

The results of Table 10 indicate that a compound containing chlorine atoms represented by Formula (III) has an especially excellent lubricating performance.

Table 10

| | Lubricant oil | Kinetic viscosity cSt(40°C) | Falex test | | SODA testing using four balls | SODA testing using pendulum |
|---|---|---|---|---|---|---|
| | | | Seizing load (lbs) | Abrasion loss (teeth) | Seizing load ($kg/cm^2$) | Friction factor |
| Ex. 31 | [S1] | 57 | 1500 or more | 9 *5 | 17.8 | 0.13 |
| Ex. 32 | [S2] | 26 | 1500 or more | 6 *5 | 9.0 | 0.13 |
| Comp.Ex. 9 | SUNISO® 3GS *1 | 30 | 400 | 21 *4 | 5.0 | 0.15 |
| Comp.Ex. 10 | $HO{-}(CH(CH_3)CH_2O)_n{-}H$ ($\overline{Mn}$=1000) | 73 | 700 | 24 *5 | 7.5 | 0.15 |
| Comp.Ex. 11 | Unister® H334R *2 | 20 | — | — | 5.0 | 0.14 |
| Comp.Ex. 12 | Tellus Oil® 32 *3 | 32 | — | — | 4.5 | 0.15 |

*1: Naphthene mineral oil, manufactured by Nippon San Sekiyu, Japan

*2: Ester oil (full ester obtained by a reaction of trimethylolpropane and a coconut derived fatty acid having 12 to 14 carbon atoms), manufactured by Nippon Oil Fats Co., Ltd., Japan

*3: Turbin Oil (containing additives), manufactured by Showa Shell Sekiyu K.K., Japan

*4: measured under blowing of refrigerant gas CFC-12

*5: measured under blowing of refrigerant gas HFC-134a

Examples 33 through 39 and Comparative Examples 13 through 15

⟨Water Absorption⟩

Various oils to be used in the present invention and polypropylene glycol were allowed to stand in a thermo-hygrostat vessel maintained at a temperature of 40 °C and at a relative humidity of 80 %, and the equilibrium water absorptions thereof were measured. The results are shown in Table 11, together with the water absorptions, as measured after allowing to stand for 24 hours at a temperature of 25 °C and at a relative humidity of 80 %, of ester oils described in Japanese Patent Application Laid-Open Specification No. 3-179091.

From Table 11, it is apparent that the oils to be employed in the present invention have lower water absorbing properties so that they are more suitable as a refrigeration equipment lubricant oil, than polyoxyalkylene glycols and ester oils which are conventional candidate oils for refrigeration equipment oils for HFC-134a.

Table 11

| | Lubricant oil | Equilibrium water absorption (ppm) |
|---|---|---|
| Example 33 | [S1] | 500 |
| Example 34 | [S2] | 500 |
| Example 35 | [S3] | 300 |
| Example 36 | [S3-C] | 300 |
| Example 37 | [S4] | 140 |
| Example 38 | [S5] | 380 |
| Example 39 | [S6] | 190 |
| Comparative Example 13 | 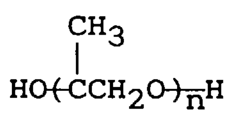 $\overline{Mn}$=1000 | 37000 |
| Comparative Example 14 | 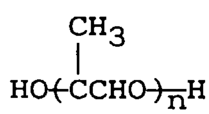 $\overline{Mn}$=2000 | 40000 |
| Comparative Example 15 | Ester oil *1 | 1600 |

*1: described in Japanese Patent Application Laid-Open Specification No. 3-179091

Example 40

〈Method for producing a high purity, fluorine-containing aromatic compound〉

Into a reactor (microcylinder having a capacity of 500 ml) were charged 60 g of bisphenol A, 5.65 g of potassium hydroxide, 120 ml of dimethylsulfoxide and 44 ml of water and, then, the resultant mixture was agitated to obtain a solution. The inside of the reactor was degassed and then, intert gas $N_2$ was charged to restore atmospheric pressure. The reactor was heated to 60 °C by means of an oil bath, followed by introduction of chlorotrifluoroethylene, thereby starting a reaction. While feeding chlorotrifluoroethylene so as to maintain the pressure in the reactor (gauge pressure) at 2 to 3 kg/cm$^2$, reaction was carried out for about 5 hours.

At completion of the reaction, the reaction mixture was separated into an oil phase mainly comprised of an oil as a desired product and a catalyst phase mainly comprised of dimethylsulfoxide, water and potassium hydroxide. The oil phase was sufficiently washed with distilled water, followed by distillation at 180 °C under 0.02 mmHg, thereby obtaining 100 g of desired product [S1]. On the other hand, dimethylsulfoxide and water were distilled off from the catalyst phase, followed by sufficiently washing with distilled water and then by distillation, thereby obtaining 20 g of the desired product [S1]. The total amount of the desired product was 120 g (yield: 99 %).

The oil obtained by the above procedure was analyzed by gas chromatography. As a result, the purity of the desired product was found to be 99.5 %.

Examples 41 through 43

Bisphenol A was reacted with chlorotrifluoroethylene in substantially the same manner as in Example 40, except that the amount of water added, the type of catalyst and the type of reaction solvent were varied. The results are shown in Table 12, together with the results of Comparative Example 16.

Example 44

The reaction was repeated in the same manner as in Example 40, except that tetrafluoroethylene was used in place of chlorotrifluoroethylene, and that the amount of water added was changed from 44 ml to 5 ml. As a result, 98 g of desired product [S2] was obtained.

The oil obtained by the above procedure was analyzed by gas chromatography. As a result, the purity of the desired product was found to be 99.9 %.

Comparative Example 16

The results of Referential Example 1 and the results of gas chromatography of the oil mentioned above are shown in Table 12.

From Table 12, it is found that the purity of the desired product has been improved by addition of water.

Table 12

| | Phenols | Fluorine-containing olefin | Reaction solvent | Catalyst | Amount of water added *1 (molar ratio of water/catalyst) | Crude yield (%) | Purity (%) |
|---|---|---|---|---|---|---|---|
| Ex. 40 | bisphenol A | chlorotrifluoroethylene | dimethylsulfoxide | KOH | 25 | 99 | 99.5 |
| Ex. 41 | " | " | " | " | 7 | 99 | 99.0 |
| Ex. 42 | " | " | " | NaOH | 25 | 99 | 99.5 |
| Ex. 43 | " | " | " | " | 1 | 99 | 95.2 |
| Comp. Ex. 16 | " | " | " | KOH | 0 | 94 | 91.5 |

*1: When KOH and NaOH were used as a base catalyst, water produced by the reaction with phenols was regarded as water added, and included in the amount of water added.

Example 45

⟨Electrical properties⟩

Volume resistivity of the oil [S1] obtained in Referential Example 1 was measured according to the method of JIS C2101 (insulating oil test). As a result, the volume resistivity of the oil [S1] at 20 °C was found to be $3.0 \times 10^{11}$ Ωcm.

Example 46

Volume resistivity of the oil [S2] obtained in Referential Example 2 was measured in substantially the same manner as in Example 45. As a result, the volume resistivity of the oil [S2] at 20 °C was found to be $5.7 \times 10^{11}$ Ωcm.

Example 47

Volume resistivity of the oil [S4] obtained in Referential Example 4 was measured in substantially the same manner as in Example 45. As a result, the volume resistivity of the oil [S4] at 20 °C was found to be $4.0 \times 10^{12}$ Ωcm.

Example 48

Volume resistivity of the oil [S5] obtained in Referential Example 5 was measured in substantially the same manner as in Example 45. As a result, the volume resistivity of the oil [S5] at 20 °C was found to be $2.9 \times 10^{12}$ Ωcm.

Example 49

⟨Purification method for a high purity, fluorine-containing aromatic compound⟩

100 g of activated carbon (Calgon® CPG, manufactured by Calgon Far East, Japan) dried in vacuum at 150 °C for 3 hours was dispersed in 400 g of R-113 to obtain a suspension, and 200 g of the oil [S1] obtained in Example 40 was added thereto, followed by agitation at room temperature overnight. The activated carbon was removed by filtration and, then, the R-113 was dis tilled off, followed by simple distillation of the oil, thereby obtaining 140 g of a colorless, transparent oil. The oil obtained according to the present purification method was analyzed by gas chromatography. As a result, the purity of the oil was found to have improved from 99.5 to 99.88 %. Further, each of the volume resistivities of the oil at 20 °C before and after purification was measured in substantially the same manner as in Example 45. As a result, it was found that the volume resistivity of the oil before purification, which was $1.0 \times 10^{11}$ Ωcm, remarkably improved to $2.2 \times 10^{13}$ Ωcm by virtue of the purification treatment. Furthermore, the purified oil was subjected to measurement of an insulation breakdown voltage according to the method of JIS C2101, thereby finding that it exhibits a value as high as 50 kV/2.5 cm or above. The above results are shown in Table 13, together with the results of Comparative Examples 17 through 20.

Example 50

120 g of the oil [S2] obtained in Example 58 was dissolved in 120 g of R-113 to obtain a solution, and the solution was treated with a column in which 500 g of silica gel (Wako Gel C-200, manufactured by Wako Pure Chemical Industries, Ltd., Japan) dried at 400 °C for 3 hours was used as a packing material. After the treatment, the R-113 was distilled off from the solution and, then, the oil was subjected to simple distillation, thereby obtaining 108 g of a colorless, transparent oil.

The oil obtained according to the above purification method was analyzed by gas chromatography. As a result, the purity of the oil was found to have improved from 99.9 % to 99.97 %. Further, the volume resistivity and the insulation breakdown voltage thereof were measured in substantially the same manners as in Examples 45 and 49, respectively. The results are shown in Table 13, together with the results of Comparative Examples 17 through 20.

Comparative Examples 17 through 20

The volume resistivity and the insulation breakdown voltage of each of polypropylene glycol, a perfluoropolyether and a mineral oil were measured in the same manner as in Examples 45 and 49, respectively. The results are shown in Table 13, together with the volume resistivity of ester oil described in Japanese Patent Application Laid-Open specification No. 3-128991. The volume resistivity and insulation breakdown voltage of the oil obtained by the present invention are advantageously higher than those of polypropylene glycol, which is a candidate oil for a refrigeration equipment oil for HFC-134a. On the other hand, the volume resistivity of the oil according to the present invention is nearly equivalent to that of the ester oil described in Japanese Patent Application Laid-Open Specification No. 3-128991.

When the volume resistivity and the insulation breakdown voltage of the oil according to the present invention are compared with those of Krytox® 143 AY and SUNISO® 3GS (both of which have poor miscibility with fluoroalkanes and, therefore, cannot be used as lubricant oils for refrigeration equipment, however, regarded as oils having the most excellent electrical properties), it is apparent that the volume resistivity of each of the oils [S1] and [S2] shows an intermediate value between those of Krytox® 143 AY and SUNISO® 3GS, and that the insulation breakdown voltage of each of the oils [S1] and [S2] shows a value excellent as compared with those of both of Krytox® 143 AY and SUNISO® 3GS.

Table 13

| | Lubricant oil | Volume resistivity (Ωcm) | Insulation breakdown voltage (kV/2.5cm) |
|---|---|---|---|
| Example 49 | [S1] | $2.2\times10^{13}$ ($1.0\times10^{11}$)*4 | 50 or above |
| Example 50 | [S2] | $2.2\times10^{13}$ ($1.7\times10^{10}$)*4 | 50 or above |
| Comparative Example 17 | $HO\text{-}(CH(CH_3)CH_2O)_n\text{-}H$ ($\overline{Mn}$=1000) | $4.9\times10^{9}$ | 47 |
| Comparative Example 18 | Krytox 143 AY *1 | $3.7\times10^{12}$ | 41 |
| Comparative Example 19 | SUNISO 3GS *2 | $2.4\times10^{14}$ | 38 |
| Comparative Example 20 | Ester Oil *3 | $1.9\times10^{12}$-$5.9\times10^{13}$ | — |

*1: $F\text{-}(CF(CF_3)CF_2O)_{m1}\text{-}CF_2CF_3$, manufactured by Du Pont, U.S.A.

*2: Naphthene mineral oil, manufactured by Nippon San Sekiyu, Japan

*3: Ester oil described in Japanese Patent Application Laid-Open Specification No. 3-128991

*4: Volume resistivity before purification

Examples 51 through 55

Each of the oil [S1] obtained in Example 40 and the oil [S2] obtained in Example 44 was purified in substantially the same manner as in Example 49, except that various adsorbents were used. The results are shown in Table 14.

From the results of Tables 13 and 14, it is apparent that adsorbents selected from activated carbon, silica gel, activated alumina, silica-alumina, activated clay and zeolite are effective for the improvement of electrical properties for oils.

Table 14

| Example | Lubricant oil | Absorbent | Volume resistivity (Ωcm) | |
|---|---|---|---|---|
| | | | before purification | after purification |
| 51 | [S1] | *1 Neobead MSD-2 | $1.0 \times 10^{11}$ | $4.3 \times 10^{12}$ |
| 52 | [S1] | *2 Nikkanite G-36 | $1.0 \times 10^{11}$ | $4.3 \times 10^{12}$ |
| 53 | [S2] | *3 Activated | $1.7 \times 10^{10}$ | $1.0 \times 10^{12}$ |
| 54 | [S2] | *4 Molecular Sieves 4A | $1.7 \times 10^{10}$ | $7.7 \times 10^{12}$ |
| 55 | [S2] | *4 Molecular Sieves 13X | $1.7 \times 10^{10}$ | $8.8 \times 10^{12}$ |

*1: Silica-alumina, manufactured by Mizusawa Kagaku K.K., Japan
*2: Activated clay, manufactured by Nippon Kassei Hakudo K.K., Japan
*3: Alumina, manufactured by Nakarai Kagaku K.K., Japan
*4: Zeolite, manufactured by Wako Pure Chemical Industries, Ltd., Japan

Examples 56 through 60

In order to evaluate the miscibility of the oil [S2] obtained in Referential Example 2 with HFC-134a, a miscibility test was conducted in the same manner as in Example 1, except that the mixing ratio of the oil to HFC-134a was varied. The results are shown in Table 15.

Table 15

| | Mixing ratio (% by weight) of [S2]/[S2]+HFC-134a | Temperature range to be miscible (°C) | |
|---|---|---|---|
| | | lower limit temperature | upper limit temperature |
| Example 56 | 5 | -78 or below | 90 or above |
| Example 57 | 10 | -78 or below | 90 or above |
| Example 58 | 30 | -78 or below | 90 or above |
| Example 59 | 50 | -78 or below | 90 or above |
| Example 60 | 80 | -78 or below | 90 or above |

From Table 15, it is apparent that the oil [S2] to be employed in the present invention is freely miscible with HFC-134a in a broad temperature range.

Example 61

The oil [S2] obtained in Referential Example 2 was completely miscible with polypropylene glycol (number average molecular weight $\overline{Mn}$ = 1000) in a mixing ratio (weight ratio of [S2]/polypropylene glycol) of 50/50. The resultant mixed oil had a kinetic viscosity of 77.7 cSt at 40 °C.

Example 62

The oil [S2] obtained in Referential Example 2 was completely miscible with ester oil (Unister® H407R, manufactured by Nippon Oil Fats Co., Ltd., Japan) in a mixing ratio (weight ratio of [S2]/ester oil) of 50/50. The resultant mixed oil had a kinetic viscosity of 28.7 cSt at 40 °C.

Example 63

The oil [S1] obtained in Referential Example 1 was completely miscible with mineral oil (naphthenic mineral oil SUNISO® 3GR, manufactured by Nippon San Sekiyu, Japan) in a mixing ratio (weight ratio of [S1]/mineral oil) of 50/50. The resultant mixed oil had a kinetic viscosity of 34.5 cSt at 40 °C.

Example 64

The miscibility of the oil [S2] obtained in Referential Example 2 with HFC-125 ($CF_3CHF_2$) was evaluated in the same manner as in Example 1. As a result, the lower limit temperature and the upper limit temperature for the oil [S2] to be miscible with the HFC-125 were found to be -78 °C or below and 90 °C, respectively.

Example 65

The miscibility of the oil [S2] obtained in Referential Example 2 with HFC-227ea ($CF_3CHFCF_3$) was evaluated in the same manner as in Example 1. As a result, the lower limit temperature and the upper limit temperature for the oil [S2] to be miscible with HFC-227ea were found to be -78 °C or below and 90 °C, respectively.

Example 66

The miscibility of the oil [S2] obtained in Referential Example 2 with HFC-32 ($CH_2F_2$) was evaluated in the same manner as in Example 1. As a result, the lower limit temperature and the upper limit temperature for the oil [S2] to be miscible with HFC-32 were found to be -78 °C or below and 90 °C, respectively.

Example 67

The miscibility of the oil [S1] obtained in Referential Example 1 with HFC-32 was evaluated in the same manner as in Example 1. As a result, the lower limit temperature and the upper limit temperature for the oil [S1] to be miscible with HFC-32 were found to be -56 °C and 90 °C or above, respectively.

Comparative Example 21

The miscibility of the oil [S15] obtained in Referential Example 15 with HFC-134a was evaluated in the same manner as in Example 1. As a result, it was found that the oil [S15] was immiscible at all with HFC-134a in the temperature range of from -78 °C to 90 °C.

Comparative Example 22

The miscibility of Fomblin® Y-06 with HFC-32 was evaluated in the same manner as in Example 1. As a result, it was found that Fomblin® Y-06 was immiscible at all with HFC-32 at a temperature of not higher than 20 °C.

From the above, it is apparent that the fluorine-containing aromatic compound to be employed in the present invention has excellent miscibility with various lower fluoroalkanes which can be used as a refrigerant.

Industrial Applicability

When a fluorine-containing aromatic compound represented by formula (III) is used as a lubricant oil for a refrigeration system, the compound exhibits an excellent miscibility with a fluoroalkane refrigerant, such as HFC-134a, in a wide temperature range of from low temperatures to high temperatures. Further, this lubricant oil has other excellent properties, such as excellent lubrication properties, ease in handling and excellent miscibility with various non-fluoro type oils (e.g., a hydrocarbon oil, a polyalkylene glycol and an ester oil) which are easily commercially available at relatively low cost. Furthermore, since the present lubricant oil has excellent lubrication properties as mentioned above, it can be advantageously used as a general purpose lubricant oil, besides the use as a refrigeration equipment oil.

**Claims**

**1.** A lubricant comprising a fluorine-containing aromatic compound represented by the formula:

$$R'(OR_f)_{n'} \qquad (III)$$

wherein R' represents an n'-valent, unsubstituted or substituted aromatic group comprising at least one unsubstituted or substituted aromatic ring and having from 6 to 30 carbon atoms, said aromatic ring being directly bonded to the oxygen atom of the $OR_{f'}$ group, n' is an integer of from 2 to 4, $R_{f'}$ represents an unsubstituted or partially substituted fluorocarbon residue having from 1 to 3 carbon atoms in which the ratio of fluorine atom to carbon atom is at least 0.6 and the main chain of which has no ether linkage therein or has at least one ether linkage therein, wherein the $OR_{f'}$ groups are the same or different, said partially substituted fluorocarbon residue having a structure such that the fluorine atom or atoms or hydrogen atom or atoms of the fluorocarbon residue is further partially substituted with a halogen atom exclusive of a fluorine atom, a hydroxyl group, an alkoxy group, an amino group, a nitrile group or a carbonyl-containing group, with the proviso that the number of substituent or substituents, exclusive of substituent fluorine atom or atoms, of said substituted fluorocarbon residue is not greater than 150 %, based on the total number of fluorine and hydrogen atoms of said substituted fluorocarbon residue.

2. The lubricant according to claim 1, which has a kinetic viscosity of from 2 to 500 centistokes at 40 °C.

3. The lubricant according to claim 1 or 2, wherein said aromatic group represented by R' of formula (III) is substituted with a substituent containing no aromatic ring and having not more than 50 carbon atoms.

4. The lubricant according to claim 3, wherein said substituent is an alkyl group or a monovalent alicyclic hydrocarbon residue.

5. The lubricant according to any one of claims 1 to 4, wherein said aromatic group represented by R' of formula (III) comprises at least two aromatic rings which are linked through a linkage group containing no aromatic ring and having not more than 50 carbon atoms.

6. The lubricant according to claim 5, wherein said linkage group is a hydrocarbon residue having a valence of from 2 to 4, an alicyclic hydrocarbon residue having a valence of from 2 to 4, an ether group or a sulfonyl group.

7. The lubricant according to claim 6, wherein said aromatic group represented by R' of formula (III) is a bivalent group represented by the formula:

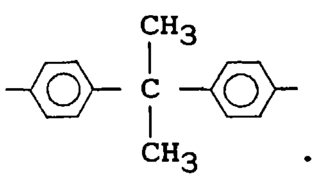

8. The lubricant according to any one of claims 1 to 7, wherein said unsubstituted fluorocarbon residue represented by $R_{f'}$ of formula (III) is selected from the group consisting of a fluoroalkyl, a fluoroalkenyl, a fluoroaryl group and a fluoroaralkyl group in which each of the alkyl, alkenyl and aralkyl groups is partially or entirely substituted with a fluorine atom.

9. The lubricant according to any one of claims 1 to 7, wherein said substituted fluorocarbon residue represented by $R_{f'}$ of formula (III) is a substituted member selected from the group consisting of a fluoroalkyl, a fluoroalkenyl, a fluoroaryl group and a fluoroaralkyl group in which each of the alkyl, alkenyl and aralkyl groups is partially or entirely substituted with a fluorine atom, and in which said substituted member is further partially substituted with a halogen atom exclusive of a fluorine atom, a hydroxyl group, an alkoxy group, an amino group, a nitrile group or a carbonyl-containing group, with the proviso that the number of substituent or substituents, exclusive of substituent fluorine atom or atoms, of said substituted fluorocarbon residue is not greater than 150%, based on the total number of fluorine and hydrogen atoms of said substituted fluorocarbon residue.

10. The lubricant according to claim 8, wherein said unsubstituted fluorocarbon residue represented by $R_{f'}$ of formula (III) is $-CF_2CHF_2$,$-CF_2CHFCF_3$ or $-CF=CF-CF_3$.

11. The lubricant according to claim 9, wherein said substituted fluorocarbon residue represented by $R_{f'}$ of formula (III)

is $-CF_2CHClF$ or $-CF_2CFCl_2$.

**12.** The lubricant according to claim 1, wherein said aromatic group represented by R' of said formula (III) is a bivalent group represented by the formula:

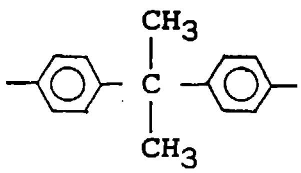

and said fluorocarbon residue represented by $R_{f'}$ of formula (III) is $-CF_2CHF_2$, $-CF_2CHFCF_3$ or $-CF=CF-CF_3$.

**13.** The lubricant according to claim 1, wherein said aromatic group represented by R' of formula (III) is a bivalent group represented by the formula:

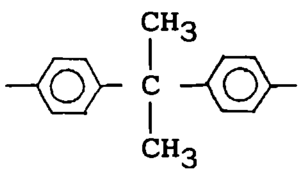

and said substituted fluorocarbon residue represented by $R_{f'}$ of formula (III) is $-CF_2CHClF$ or $-CF_2CFCl_2$.

European Patent Office

# EUROPEAN SEARCH REPORT

Application Number
EP 97 20 1187

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| X | US 3 265 741 A (W.A. SHEPPARD)<br>* the whole document *<br>--- | 1,5,6,8,10 | C10M105/54<br>//C10N40:30 |
| E | US 5 104 559 A (C.E. PAWLOSKI)<br>* column 4, line 5 - line 22 *<br>--- | 1,2,5-8,10,12 | |
| P,A | GB 2 245 587 A (IMPERIAL CHEMICAL INDUSTRIES)<br>* page 3, line 30 - line 33 *<br>* page 4, line 28 - line 29 *<br>* page 5, line 3 - line 5 *<br>--- | 1-4,8 | |
| A | GB 1 366 691 A (IMPERIAL CHEMICAL INDUSTRIES LIMITED)<br>* page 1, line 35 - line 43 *<br>* page 3, line 40 *<br>* page 5, line 3 *<br>--- | 1-4 | |
| P,A | EP 0 432 273 A (ASAHI KASEI KOGYO KABUSHIKI KAISHA)<br>* page 34; example 22 *<br>* page 35; examples 23-26 * | 1-12 | TECHNICAL FIELDS SEARCHED (Int.Cl.6) |
| A | & WO 90 15122 A (ASAHI KASEI KOGYO KABUSHIKI KAISHA) 13 December 1990<br>--- | 1-12 | C10M |
| A | US 4 024 192 A (SIEGFRIED BENNINGER)<br>* column 4, line 34 - line 36 *<br>----- | | |

The present search report has been drawn up for all claims

| Place of search | Date of completion of the search | Examiner |
|---|---|---|
| THE HAGUE | 16 June 1997 | Hilgenga, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)